(19) **Europäisches Patentamt**
**European Patent Office**
**Office européen des brevets**

(11) **EP 2 405 658 A1**

(12) **EUROPEAN PATENT APPLICATION**
published in accordance with Art. 153(4) EPC

(43) Date of publication:
**11.01.2012 Bulletin 2012/02**

(51) Int Cl.:
**H04N 7/32** (2006.01)

(21) Application number: **10748658.1**

(86) International application number:
**PCT/JP2010/052924**

(22) Date of filing: **25.02.2010**

(87) International publication number:
**WO 2010/101063 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 JP 2009054075**

(71) Applicant: **Sony Corporation Tokyo 108-0075 (JP)**

(72) Inventor: **SATO, Kazushi Tokyo 108-0075 (JP)**

(74) Representative: **Mills, Julia D Young & Co LLP 120 Holborn London EC1N 2DY (GB)**

(54) **IMAGE PROCESSING DEVICE AND METHOD**

(57)    The present invention relates to an image processing device and method which enable compression efficiency to be improved.

A horizontal pixel average value AveH of pixel values A through D is calculated, and a horizontal pixel distribution value DistH is calculated. A vertical pixel average value AveV of pixel values I through J is calculated, and a vertical pixel distribution value DistV is calculated. In the event that the horizontal pixel distribution value DistH is smaller than a threshold ThH, and the vertical pixel distribution value DistV is greater than a threshold ThV, a mode 1 is applied to a current block made up of pixels a through p. In the event that the horizontal pixel distribution value DistH is greater than the threshold ThH, and the vertical pixel distribution value DistV is smaller than the threshold ThV, a mode 0 is applied to the current block. The present invention may be applied to an image encoding device which performs encoding using the H. 264/AVC system, for example.

## FIG. 9

**Description**

Technical Field

The present invention relates to an image processing device and method, and specifically relates to an image processing device and method which enable compression efficiency to be improved.

Background Art

In recent years, there have been spreading devices which subject an image to compression encoding by employing an encoding system for handling image information as digital signals, and taking advantage of redundancy peculiar to the image information with transmission and accumulation of high effective information taken as an object at that time to compress the image by orthogonal transform such as discrete cosine transform or the like and motion compensation. Examples of this encoding method include MPEG (Moving Picture Expert Group).

In particular, MPEG2 (ISO/IEC 13818-2) is defined as a general-purpose image encoding system, and is a standard encompassing both of interlaced scanning images and sequential-scanning images, and standard resolution images and high definition images. For example, MPEG2 has widely been employed now by broad range of applications for professional usage and for consumer usage. By employing the MPEG2 compression system, a code amount (bit rate) of 4 through 8 Mbps is allocated in the event of an interlaced scanning image of standard resolution having 720 × 480 pixels, for example. By employing the MPEG2 compression system, a code amount (bit rate) of 18 through 22 Mbps is allocated in the event of an interlaced scanning image of high resolution having 1920 × 1088 pixels, for example. Thus, a high compression rate and excellent image quality can be realized.

With MPEG2, high image quality encoding adapted to broadcasting usage is principally taken as a object, but a lower code amount (bit rate) than the code amount of MPEG1, i.e., an encoding system having a higher compression rate is not handled. According to spread of personal digital assistants, it has been expected that needs for such an encoding system will be increased from now on, and in response to this, standardization of the MPEG4 encoding system has been performed. With regard to an image encoding system, the specification thereof was confirmed as international standard as ISO/IEC 14496-2 in December in 1998.

Further, in recent years, standardization of a standard serving as H.26L (ITU-T Q6/16 VCEG) has progressed with image encoding for television conference usage taken as an object. With H.26L, it has been known that as compared to a conventional encoding system such as MPEG2 or MPEG4, though greater computation amount is requested for encoding and decoding thereof, higher encoding efficiency is realized. Also, currently, as part of activity of MPEG4, standardization for taking advantage of a function that is not supported by H.26L with this H.26L taken as base to realize higher encoding efficiency has been performed as Joint Model of Enhanced-Compression Video Coding. As a schedule of standardization, H.264 and MPEG-4 Part10

(Advanced Video Coding, hereafter referred to as H.264/AVC) become an international standard in March, 2003.

Incidentally, factors for the H.264/AVC system realizing high encoding efficiency as compared to the conventional MPEG2 system or the like include improvement in prediction precision according to an intra prediction method, which will be described next.

With the H.264/AVC system, the prediction modes in nine kinds of 4 × 4-pixel and 8 × 8-pixel block units, and four kinds of 16 × 16-pixel macro block units are determined regarding luminance signals. The intra prediction modes of four kinds of 8 × 8-pixel block units are determined regarding color difference signals. The intra prediction modes for color difference signals may be set independently from the intra prediction modes for luminance signals.

Further, with regard to the 4 × 4-pixel intra prediction mode and 8 × 8-pixel intra prediction mode for luminance signals, one prediction mode is defined for each block of 4 × 4-pixel and 8 × 8-pixel luminance signals. With regard to the 16 × 16-pixel intra prediction modes for luminance signals, and the intra prediction modes for color difference signals, one prediction mode is defined as to one macro block (see "8.3 Intra Prediction" in NPL 1).

Accordingly, in particular, with the 4 × 4-pixel intra prediction mode (also referred to as intra 4 × 4 prediction mode) for luminance signals, information indicting which prediction mode is defined as to each of the 16 blocks has to be transmitted to the decoding side, and accordingly, encoding efficiency deteriorates.

Therefore, with NPL 2, it has been proposed to take a prediction mode as to a block to be encoded as DC prediction prior to intra prediction in the event that the spread of adjacent pixels is equal to or smaller than a threshold, and to not transmit bits necessary for information indicating which prediction mode.

Citation List

Non Patent Literature

NPL 1: "ITU-T Recommendation H.264 Advanced video coding for generic audiovisual", November 2007
NPL 2: "Adaptive intra mode bit skip in intra coding", VCEG-AJ11, ITU-Telecommunications Standardization Sector STUDY GROUP Question 6 Video coding Experts Group (VCEG), 8-10 Oct 2008

Summary of Invention

Technical Problem

Incidentally, with NPL2, it has been proposed only to reduce a mode bit regarding DC prediction of which the mode number (CodeNumber) = 2.
However, with the H.264/AVC system, the appearing probabilities of Vertical prediction and Horizontal prediction wherein mode numbers = 0, 1 that are smaller than the mode number in DC prediction are set respectively are high. Accordingly, influence of a mode bit necessary for information indicating whether the Vertical prediction and Horizontal prediction is great as to deterioration in encoding efficiency.
The present invention has been made in light of such a situation, which improves further encoding efficiency by reducing a mode bit regarding the Vertical prediction and Horizontal prediction.

Solution to Problem

An image processing device according to a first aspect of the present invention includes: horizontal pixel distribution value reception means configured to receive a horizontal pixel distribution value that is a distribution value of an adjacent pixel value positioned on the upper portion of a current block for intra prediction; vertical pixel distribution value reception means configured to receive a vertical pixel distribution value that is a distribution value of an adjacent pixel value positioned on the left portion of the current block; prediction mode application determining means configured to apply a vertical prediction mode to the current block in the event that the horizontal pixel distribution value received by the horizontal pixel distribution value reception means is greater than a predetermined threshold in the horizontal direction, and also the vertical pixel distribution value received by the vertical pixel distribution value reception mean is smaller than a predetermined threshold in the vertical direction; intra prediction means configured to generate a prediction image of the current block in the prediction mode applied by the prediction mode application determining means; and encoding means configured to encode difference between the image of the current block and the prediction image generated by the intra prediction means.
The prediction mode application determining means may apply a horizontal prediction mode to the current block in the event that the horizontal pixel distribution value received by the horizontal pixel distribution value reception means is smaller than the threshold in the horizontal direction, and also the vertical pixel distribution value received by the vertical pixel distribution value reception mean is greater than the threshold in the vertical direction.
The threshold in the vertical direction and the threshold in the horizontal direction are defined as a function for a quantization parameter as to the current block.
The greater the quantization parameter is, the greater a value is set to the threshold in the vertical direction and the threshold in the horizontal direction.
The image processing device may further include: horizontal pixel distribution value calculating means configured to calculate the horizontal pixel distribution value; and vertical pixel distribution value calculating means configured to calculate the vertical pixel distribution value.
An image processing method according to the first aspect of the present invention includes the step of: causing an image processing device to receive a horizontal pixel distribution value that is a distribution value of an adjacent pixel value positioned on the upper portion of a current block for intra prediction; to receive a vertical pixel distribution value that is a distribution value of an adjacent pixel value positioned on the left portion of the current block; to apply a vertical prediction mode to the current block in the event that the received horizontal pixel distribution value is greater than a predetermined threshold in the horizontal direction, and also the received vertical pixel distribution value is smaller than a predetermined threshold in the vertical direction; to generate a prediction image of the current block in an applied prediction mode; and to encode difference between an image of the current block and the generated prediction image.
An image processing device according to a second aspect of the present invention includes: decoding means configured to decode an encoded image of a current block for intra prediction; horizontal pixel distribution value reception means configured to receive a horizontal pixel distribution value that is a distribution value of an adjacent pixel value positioned on the upper portion of the current block; vertical pixel distribution value reception means configured to receive a vertical pixel distribution value that is a distribution value of an adjacent pixel value positioned on the left portion of the current block; prediction mode application determining means configured to apply a vertical prediction mode to the current block in the event that the vertical pixel distribution value received by the vertical pixel distribution value reception means is smaller than a predetermined threshold in the vertical direction, and also the horizontal pixel distribution value received by the horizontal pixel distribution value reception mean is greater than a predetermined threshold in the horizontal direction; intra prediction means configured to generate a prediction image of the current block in the prediction mode applied by the prediction mode application determining means; and calculating means configured to add the image decoded by the decoding means, and the prediction image generated by the intra prediction means.

The prediction mode application determining means may apply a horizontal prediction mode to the current block in the event that the horizontal pixel distribution value received by the horizontal pixel distribution value reception means is smaller than a threshold in the horizontal direction, and also the vertical pixel distribution value received by the vertical pixel distribution value reception mean is greater than a threshold in the vertical direction.

The threshold in the vertical direction and the threshold in the horizontal direction are defined as a function for a quantization parameter as to the current block.

The greater the quantization parameter is, the greater a value is set to the threshold in the vertical direction and the threshold in the horizontal direction.

The image processing device may further include: horizontal pixel distribution value calculating means configured to calculate the horizontal pixel distribution value; and vertical pixel distribution value calculating means configured to calculate the vertical pixel distribution value.

An image processing method according to the second aspect of the present invention includes the step of: causing an image processing device to decode an encoded image of a current block for intra prediction; to receive a horizontal pixel distribution value that is a distribution value of an adjacent pixel value positioned on the upper portion of the current block; to receive a vertical pixel distribution value that is a distribution value of an adjacent pixel value positioned on the left portion of the current block; to apply a vertical prediction mode to the current block in the event that the received horizontal pixel distribution value is greater than a predetermined threshold in the horizontal direction, and also the received vertical pixel distribution value is smaller than a predetermined threshold in the vertical direction; to generate a prediction image of the current block in an applied prediction mode; and to add the decoded image and the generated prediction image.

With the first aspect of the present invention, a horizontal pixel distribution value that is a distribution value of an adjacent pixel value positioned on the upper portion of a current block for intra prediction is received, and a vertical pixel distribution value that is a distribution value of an adjacent pixel value positioned on the left portion of the current block is received. In the event that the received horizontal pixel distribution value is greater than a predetermined threshold in the horizontal direction, and also the received vertical pixel distribution value is smaller than a predetermined threshold in the vertical direction, a vertical prediction mode is applied to the current block. A prediction image of the current block is then generated in an applied prediction mode, and difference between an image of the current block and the generated prediction image is encoded.

With the second aspect of the present invention, an encoded image of a current block for intra prediction is decoded, a horizontal pixel distribution value that is a distribution value of an adjacent pixel value positioned on the upper portion of the current block for intra prediction is received, and a vertical pixel distribution value that is a distribution value of an adjacent pixel value positioned on the left portion of the current block is received. In the event that the received horizontal pixel distribution value is greater than a predetermined threshold in the horizontal direction, and also the received vertical pixel distribution value is smaller than a predetermined threshold in the vertical direction, a vertical prediction mode is applied to the current block. A prediction image of the current block is then generated in an applied prediction mode, and the decoded image and the generated prediction image are added.

Note that the above-mentioned image processing devices may be stand-alone devices, or may be internal blocks making up one image encoding device or image decoding device. Advantageous Effects of Invention

According to the first aspect of the present invention, images can be encoded. Also, according to the first aspect of the present invention, encoding efficiency can be improved.

According to the second aspect of the present invention, images can be decoded. Also, according to the second aspect of the present invention, encoding efficiency can be improved.

Brief Description of Drawings

[Fig. 1] Fig. 1 is a block diagram illustrating the configuration of an embodiment of an image encoding device to which the present invention has been applied.
[Fig. 2] Fig. 2 is a block diagram illustrating a configuration example of a horizontal vertical prediction determining unit.

[Fig. 3] Fig. 3 is a flowchart for describing the encoding processing of the image encoding device in Fig. 1.

[Fig. 4] Fig. 4 is a flowchart for describing the prediction processing in step S21 in Fig. 3.

[Fig. 5] Fig. 5 is a diagram for describing processing sequence in the event of a $16 \times 16$-pixel intra prediction mode.

[Fig. 6] Fig. 6 is a diagram illustrating the kinds of $4 \times 4$-pixel intra prediction modes for luminance signals.

[Fig. 7] Fig. 7 is a diagram illustrating the kinds of $4 \times 4$-pixel intra prediction modes for luminance signals.

[Fig. 8] Fig. 8 is a diagram for describing the direction of $4 \times 4$-pixel intra prediction.

[Fig. 9] Fig. 9 is a diagram for describing $4 \times 4$-pixel intra prediction.

[Fig. 10] Fig. 10 is a diagram for describing encoding of the $4 \times 4$-pixel intra prediction modes for luminance signals.

[Fig. 11] Fig. 11 is a diagram illustrating the kinds of $8 \times 8$-pixel intra prediction modes for luminance signals.

[Fig. 12] Fig. 12 is a diagram illustrating the kinds of $8 \times 8$-pixel intra prediction modes for luminance signals.

[Fig. 13] Fig. 13 is a diagram illustrating the kinds of $16 \times 16$-pixel intra prediction modes for luminance signals.

[Fig. 14] Fig. 14 is a diagram illustrating the kinds of $16 \times 16$-pixel intra prediction modes for luminance signals.

[Fig. 15] Fig. 15 is a diagram for describing $16 \times 16$-pixel intra prediction.

[Fig. 16] Fig. 16 is a diagram illustrating the kinds of intra prediction modes for color difference signals.

[Fig. 17] Fig. 17 is a flowchart for describing the intra horizontal vertical prediction determination processing in step S31 in Fig. 4.

[Fig. 18] Fig. 18 is a diagram for describing quantization parameters.

[Fig. 19] Fig. 19 is a flowchart for describing the intra prediction processing in step S32 in Fig. 4.

[Fig. 20] Fig. 20 is a flowchart for describing the inter motion prediction processing in step S33 in Fig. 4.

[Fig. 21] Fig. 21 is a block diagram illustrating the configuration of an embodiment of an image decoding device to which the present invention has been applied.

[Fig. 22] Fig. 22 is a flowchart for describing the decoding processing of the image decoding device in Fig. 21.

[Fig. 23] Fig. 23 is a flowchart for describing the predictive processing in step S138 in Fig. 22.

[Fig. 24] Fig. 24 is a flowchart for describing the intra horizontal vertical prediction determination processing in step S175 in Fig. 23.

[Fig. 25] Fig. 25 is a diagram illustrating an example of an extended block size.

[Fig. 26] Fig. 26 is a block diagram illustrating a configuration example of the hardware of a computer.

[Fig. 27] Fig. 27 is a block diagram illustrating a principal configuration example of a television receiver to which the present invention has been applied.

[Fig. 28] Fig. 28 is a block diagram illustrating a principal configuration example of a cellular phone to which the present invention has been applied.

[Fig. 29] Fig. 29 is a block diagram illustrating a principal configuration example of a hard disk recorder to which the present invention has been applied.

[Fig. 30] Fig. 30 is a block diagram illustrating a principal configuration example of a camera to which the present invention has been applied.

Description of Embodiments

Hereafter, an embodiment of the present invention will be described with reference to the drawings.

Configuration Example of Image Encoding Device

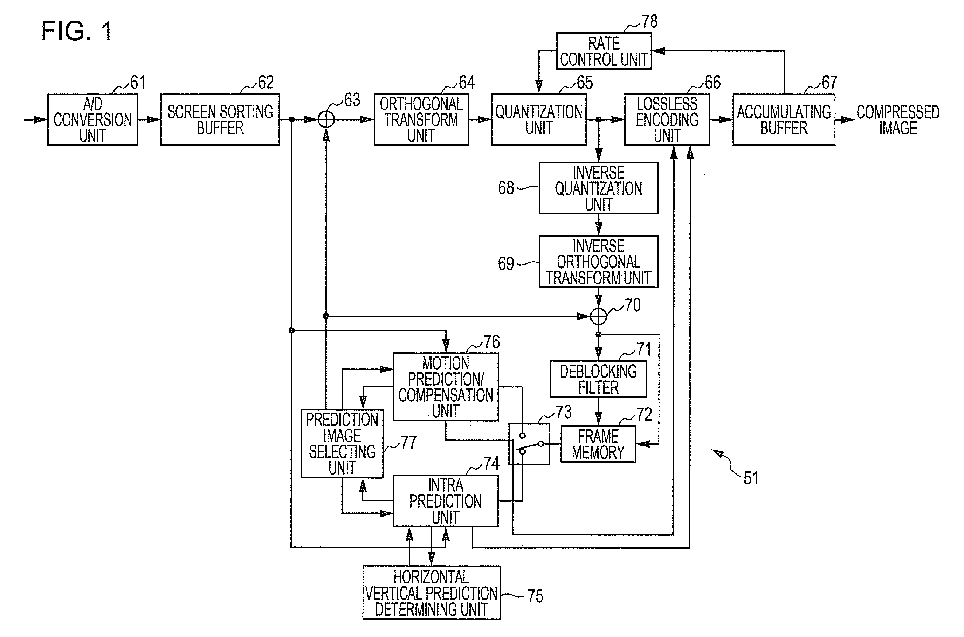

Fig. 1 represents the configuration of an embodiment of an image encoding device serving as an image processing device to which the present invention has been applied.

This image encoding device 51 subjects an image to compression encoding using, for example, the H.264 and MPEG-4 Part10 (Advanced Video Coding) (hereafter, described as 264/AVC) system.

With the example in Fig. 1, the image encoding device 51 is configured of an A/D conversion unit 61, a screen sorting buffer 62, a computing unit 63, an orthogonal transform unit 64, a quantization unit 65, a lossless encoding unit 66, an accumulating buffer 67, an inverse quantization unit 68, an inverse orthogonal transform unit 69, a computing unit 70, a deblocking filter 71, frame memory 72, a switch 73, an intra prediction unit 74, a horizontal vertical prediction determining unit 75, a motion prediction/compensation unit 76, a prediction image selecting unit 77, and a rate control unit 78.

The A/D conversion unit 61 converts an input image from analog to digital, and outputs to the screen sorting buffer 62 for storing. The screen sorting buffer 62 sorts the images of frames in the stored order for display into the order of frames for encoding according to GOP (Group of Picture).

The computing unit 63 subtracts from the image read out from the screen sorting buffer 62 the prediction image from the intra prediction unit 74 selected by the prediction image selecting unit 77 or the prediction image from the motion prediction/compensation unit 76, and outputs difference information thereof to the orthogonal transform unit 64. The orthogonal transform unit 64 subjects the difference information from the computing unit 63 to orthogonal transform, such as discrete cosine transform, Karhunen-Loéve transform, or the like, and outputs a transform coefficient thereof. The quantization unit 65 quantizes the transform coefficient that the orthogonal transform unit 64 outputs.

The quantized transform coefficient that is the output of the quantization unit 65 is input to the lossless encoding unit 66, and subjected to lossless encoding, such as variable length coding, arithmetic coding, or the like, and compressed.

The lossless encoding unit 66 obtains information indicating intra prediction from the intra prediction unit 74, and obtains information indicating an inter prediction mode, and so forth from the motion prediction/compensation unit 76. Note that the information indicating intra prediction will hereafter be referred to as intra prediction mode information. Also, the information indicating inter prediction will hereafter be referred to as inter prediction mode information.

The lossless encoding unit 66 encodes the quantized transform coefficient, and also encodes the information indicating intra prediction, the information indicating an inter prediction mode, and so forth, and takes these as part of header information in the compressed image. The lossless encoding unit 66 supplies the encoded data to the accumulating buffer 67 for accumulation.

For example, with the lossless encoding unit 66, lossless encoding processing, such as variable length coding, arithmetic coding, or the like, is performed. Examples of the variable length coding include CAVLC (Context-Adaptive Variable Length Coding) determined by the H.264/AVC system. Examples of the arithmetic coding include CABAC (Context-Adaptive Binary Arithmetic Coding).

The accumulating buffer 67 outputs the data supplied from the lossless encoding unit 66 to, for example, a storage device or transmission path or the like downstream not shown in the drawing, as a compressed image encoded by the H.264/AVC system.

Also, the quantized transform coefficient output from the quantization unit 65 is also input to the inverse quantization unit 68, subjected to inverse quantization, and then subjected to further inverse orthogonal transform at the inverse orthogonal transform unit 69. The output subjected to inverse orthogonal transform is added to the prediction image supplied from the prediction image selecting unit 77 by the computing unit 70, and changed into a locally decoded image. The deblocking filter 71 removes block distortion from the decoded image, and then supplies to the frame memory 72 for accumulation. An image before the deblocking filter processing is performed by the deblocking filter 71 is also supplied to the frame memory 72 for accumulation.

The switch 73 outputs the reference images accumulated in the frame memory 72 to the motion prediction/compensation unit 76 or intra prediction unit 74.

With this image encoding device 51, the I picture, B picture, and P picture from the screen sorting buffer 62 are supplied to the intra prediction unit 74 as an image to be subjected to intra prediction (also referred to as intra processing), for example. Also, the B picture and P picture read out from the screen sorting buffer 62 are supplied to the motion prediction/compensation unit 76 as an image to be subjected to inter prediction (also referred to as inter processing).

The intra prediction unit 74 performs intra prediction processing of all of the intra prediction modes serving as candidates based on the image to be subjected to intra prediction read out from the screen sorting buffer 62, and the reference image supplied from the frame memory 72 to generate a prediction image.

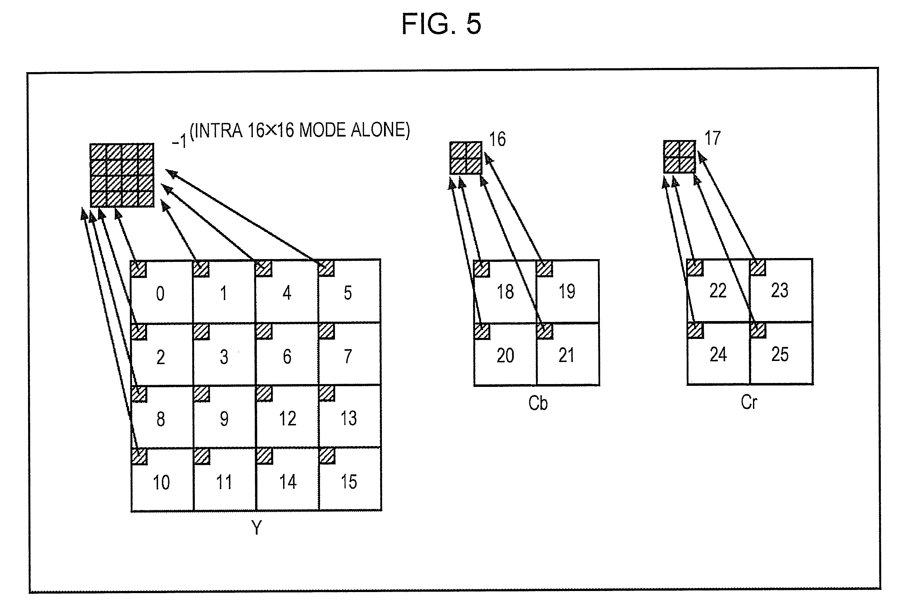

Intra prediction modes for luminance signals include an intra $4 \times 4$ prediction mode, an intra $8 \times 8$ prediction mode, and an intra $16 \times 16$ prediction mode, which differ in block units to be processed. The details of the intra prediction modes will be described later in Fig. 5 and thereafter.

At this time, with regard to the intra $4 \times 4$ prediction mode, the intra prediction processing of the prediction mode according to the application mode information from the horizontal vertical prediction determining unit 75 is performed.

Specifically, in the event that of the prediction modes, a mode 0 or mode 1 has been applied to the current block by the horizontal vertical prediction determining unit 75, the intra prediction unit 74 performs the intra prediction processing according to the applied mode 0 or mode 1 to generate a prediction image. In the event that neither the mode 0 nor mode 1 of the prediction modes has not been applied to the current block by the horizontal vertical prediction determining unit 75, the intra prediction unit 74 performs the same intra prediction processing as with the case of other intra prediction modes to generate a prediction image.

Note that the intra prediction unit 74 supplies the information (pixel value) of an adjacent pixel of the current block of intra $4 \times 4$ prediction mode to the horizontal vertical prediction determining unit 75 for these processes, and receives the application mode information from the horizontal vertical prediction determining unit 75.

The intra prediction unit 74 calculates a cost function value as to the intra prediction mode where the prediction image has been generated, and selects the intra prediction mode where the calculated cost function value gives the minimum value, as the optimal intra prediction mode. The intra prediction unit 74 supplies the prediction image generated in the optimal intra prediction mode and the cost function value thereof to the prediction image selecting unit 77.

In the event that the prediction image generated in the optimal intra prediction mode has been selected by the prediction image selecting unit 77, the intra prediction unit 74 supplies information indicating the optimal intra prediction mode to the lossless encoding unit 66. Note that, at this time, in the event that the optimal intra prediction mode is the intra $4 \times 4$ prediction mode of the mode 0 or mode 1 applied by the horizontal vertical prediction determining unit 75, the intra prediction unit 74 does not supply the information indicating the optimal intra prediction mode to the lossless encoding unit 66.

In the event that the information has been transmitted from the intra prediction unit 74, the lossless encoding unit 66 encodes this information, and takes this as part of the header information in the compressed image.

The horizontal vertical prediction determining unit 75 calculates the average value of the pixel values of the upper adjacent pixels, and the average value of the pixel values of the left adjacent pixels of the current block of intra prediction, uses these to further calculate the distribution value of the pixel values of the upper adjacent pixels, and the distribution value of the pixel values of the left adjacent pixels.

The horizontal vertical prediction determining unit 75 applies the prediction mode according to a comparison result between the calculated distribution value of the upper adjacent pixels and a predetermined threshold in the horizontal direction, and a comparison result between the calculated distribution value of the left adjacent pixels and a predetermined threshold in the vertical direction, to the current block. The information of the application mode indicting the mode applied to the current block is supplied to the intra prediction unit 74.

The motion prediction/compensation unit 76 performs motion prediction and compensation processing regarding all of the inter prediction modes serving as candidates. Specifically, as to the motion prediction/compensation unit 76, the image to be subjected to inter processing read out from the screen sorting buffer 62 is supplied, and the reference image is supplied from the frame memory 72 via the switch 73. The motion prediction/compensation unit 76 detects the motion vectors of all of the inter prediction modes serving as candidates based on the image to be subjected to inter processing and the reference image, subjects the reference image to compensation processing based on the motion vectors, and generates a prediction image.

Also, the motion prediction/compensation unit 76 calculates a cost function value as to all of the inter prediction modes serving as candidates. The motion prediction/compensation unit 76 determines, of the calculated cost function values, the prediction mode that provides the minimum value to be the optimal inter prediction mode.

The motion prediction/compensation unit 76 supplies the prediction image generated in the optimal inter prediction mode, and the cost function value thereof to the prediction image selecting unit 77. In the event that the prediction image generated in the optimal inter prediction mode by the prediction image selecting unit 77 has been selected, the motion prediction/compensation unit 76 outputs information indicating the optimal inter prediction mode (inter prediction mode information) to the lossless encoding unit 66.

Note that the motion vector information, flag information, reference frame information, and so forth are output to the lossless encoding unit 66 according to need. The lossless encoding unit 66 also subjects the information from the motion prediction/compensation unit 76 to lossless encoding processing such as variable length coding, arithmetic coding, or the like, and inserts into the header portion of the compressed image.

The prediction image selecting unit 77 determines the optimal prediction mode from the optimal intra prediction mode and the optimal inter prediction mode based on the cost function values output from the intra prediction unit 74 or motion prediction/compensation unit 76. The prediction image selecting unit 77 then selects the prediction image in the determined optimal prediction mode, and supplies to the computing units 63 and 70. At this time, the prediction image selecting unit 77 supplies the selection information of the prediction image to the intra prediction unit 74 or motion prediction/compensation unit 76.

The rate control unit 78 controls the rate of the quantization operation of the quantization unit 65 based on a compressed image accumulated in the accumulating buffer 67 so as not to cause overflow or underflow.

Configuration Example of Horizontal Vertical Prediction Determining Unit

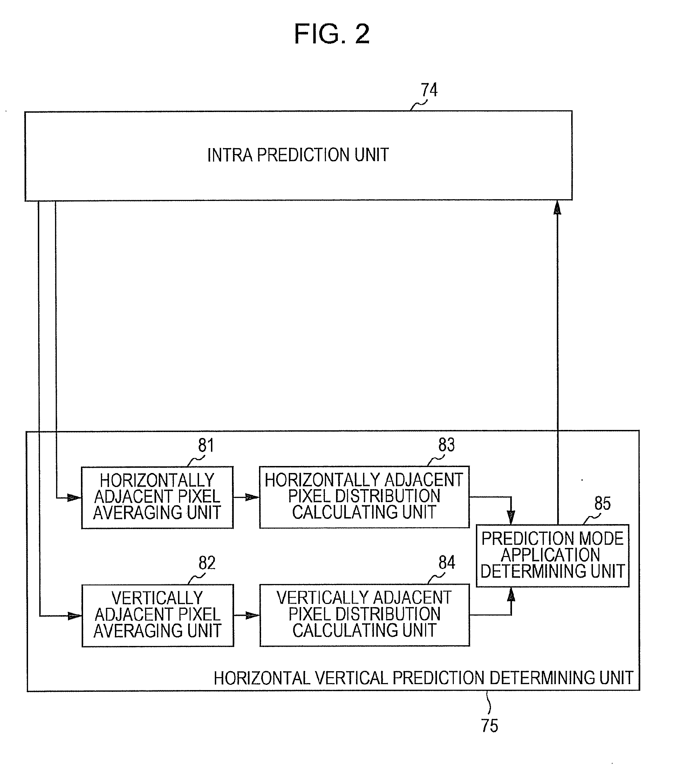

Fig. 2 is a block diagram illustrating a detailed configuration example of the horizontal vertical prediction determining unit.

With the example in Fig. 2, the horizontal vertical prediction determining unit 75 is configured of a horizontally adjacent pixel averaging unit 81, a vertically adjacent pixel averaging unit 82, a horizontally adjacent pixel distribution calculating unit 83, a vertically adjacent pixel distribution calculating unit 84, and a prediction mode application determining unit 85.

The pixel values of the upper adjacent pixels of the current block in the event of the intra $4 \times 4$ prediction mode are input from the intra prediction unit 74 to the horizontally adjacent pixel averaging unit 81. The horizontally adjacent pixel averaging unit 81 uses the input pixel values of the upper adjacent pixels to calculate a horizontal pixel average value that is the average value of the pixel values of the upper adjacent pixels, and supplies the calculated horizontal pixel average value to the horizontally adjacent pixel distribution calculating unit 83.

The pixel values of the left adjacent pixels of the current block in the event of the intra $4 \times 4$ prediction mode are input from the intra prediction unit 74 to the vertically adjacent pixel averaging unit 82. The vertically adjacent pixel averaging unit 82 uses the input pixel values of the left adjacent pixels to calculate a vertical pixel average value that is the average value of the pixel values of the left adjacent pixels, and supplies the calculated vertical pixel average value to the vertically adjacent pixel distribution calculating unit 84.

The horizontally adjacent pixel distribution calculating unit 83 uses the horizontal pixel average value from the horizontally adjacent pixel averaging unit 81 to calculate a horizontal pixel distribution value that is the distribution value of the pixel values of the upper adjacent pixels, and supplies the calculated horizontal pixel distribution value to the prediction mode application determining unit 85.

The vertically adjacent pixel distribution calculating unit 84 uses the vertical pixel average value from the vertically adjacent pixel averaging unit 82 to calculate a vertical pixel distribution value that is the distribution value of the pixel values of the left adjacent pixels, and supplies the calculated vertical pixel distribution value to the prediction mode application determining unit 85.

The prediction mode application determining unit 85 receives the horizontal pixel distribution value from the horizontally adjacent pixel distribution calculating unit 83, and the vertical pixel distribution value from the vertically adjacent pixel distribution calculating unit 84. The prediction mode application determining unit 85 compares the horizontal pixel distribution value received from the horizontally adjacent pixel distribution calculating unit 83, and a predetermined threshold in the horizontal direction, and compares the vertical pixel distribution value received from the vertically adjacent pixel distribution calculating unit 84, and a predetermined threshold in the vertical direction.

The prediction mode application determining unit 85 applies a mode 0 (Vertical Prediction) to the current block as a prediction mode in the event that the horizontal pixel distribution value is greater than the threshold in the horizontal direction, and also the vertical pixel distribution value is smaller than the threshold in the vertical direction.

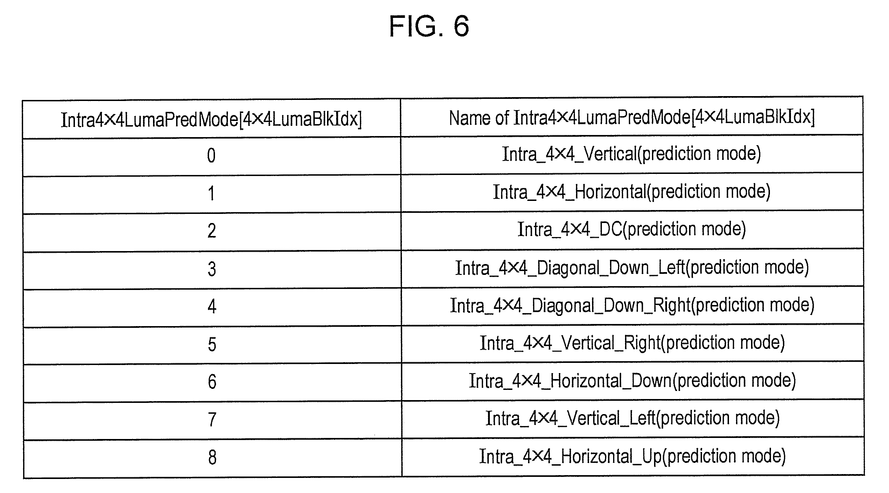

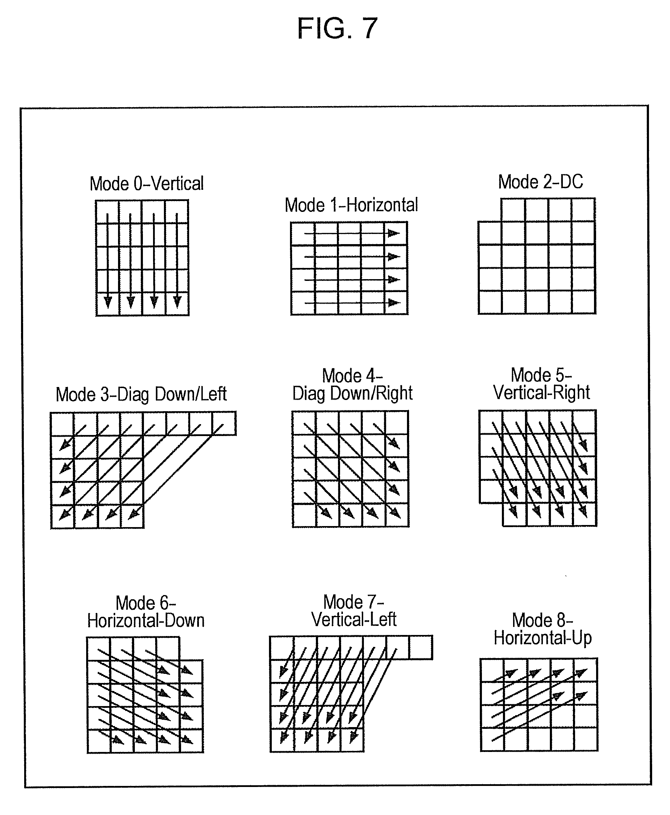

The prediction mode application determining unit 85 applies a mode 1 (Horizontal Prediction) to the current block as a prediction mode in the event that the horizontal pixel distribution value is smaller than the threshold in the horizontal direction, and also the vertical pixel distribution value is greater than the threshold in the vertical direction. Note that the details of these mode 0 and mode 1 will be described later with reference to Fig. 6 and Fig. 7.

In the event of other than the above-mentioned comparison results, the prediction mode application determining unit 85 applies the normal prediction mode to the current block. Specifically, in this case, the motion prediction and compensation is performed in the nine kinds of prediction modes of the intra $4 \times 4$ prediction modes, cost function values are calculated, and the optimal intra prediction mode of which the cost function value is small is selected out thereof.

Description of Encoding Processing of Image Encoding Device

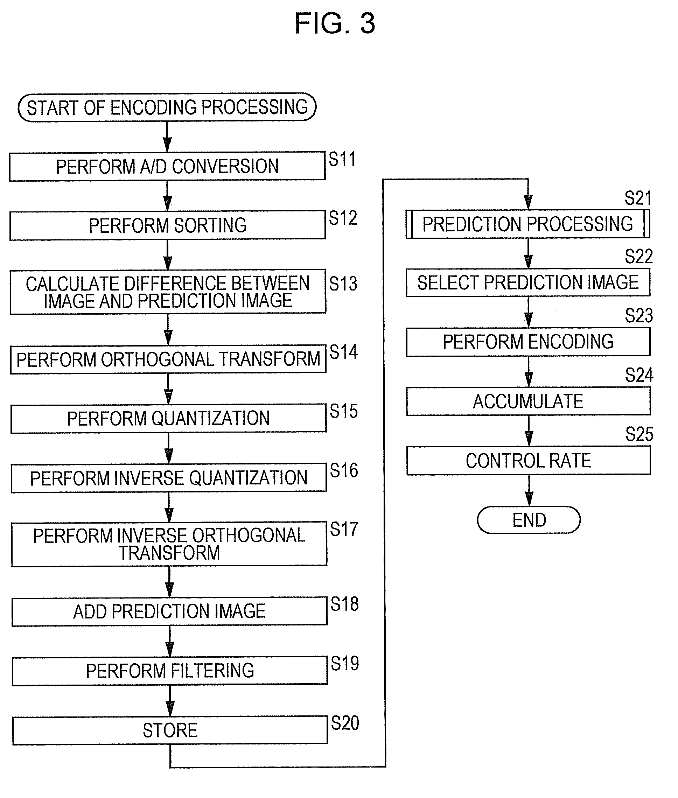

Next, the encoding processing of the image encoding device 51 in Fig. 1 will be described with reference to the flowchart in Fig. 3.

In step S11, the A/D conversion unit 61 converts an input image from analog to digital. In step S12, the screen sorting buffer 62 stores the image supplied from the A/D conversion unit 61, and performs sorting from the sequence for displaying the pictures to the sequence for encoding.

In step S13, the computing unit 63 computes difference between an image sorted in step S12 and the prediction image. The prediction image is supplied to the computing unit 63 from the motion prediction/compensation unit 76 in the event of performing inter prediction, and from the intra prediction unit 74 in the event of performing intra prediction, via the prediction image selecting unit 77.

The difference data is smaller in the data amount as compared to the original image data. Accordingly, the data amount can be compressed as compared to the case of encoding the original image without change.

In step S14, the orthogonal transform unit 64 subjects the difference information supplied from the computing unit 63 to orthogonal transform. Specifically, orthogonal transform, such as discrete cosine transform, Karhunen-Loéve transform, or the like, is performed, and a transform coefficient is output. In step S15, the quantization unit 65 quantizes the transform coefficient. At the time of this quantization, a rate is controlled such that later-described processing in step S25 will be described.

The difference information thus quantized is locally decoded as follows. Specifically, in step S16, the inverse quantization unit 68 subjects the transform coefficient quantized by the quantization unit 65 to inverse quantization using a property corresponding to the property of the quantization unit 65. In step S17, the inverse orthogonal transform unit 69 subjects the transform coefficient subjected to inverse quantization by the inverse quantization unit 68 to inverse orthogonal transform using a property corresponding to the property of the orthogonal transform unit 64.

In step S18, the computing unit 70 adds the prediction image input via the prediction image selecting unit 77 to the locally decoded difference information, and generates a locally decoded image (the image corresponding to the input to the computing unit 63). In step S19, the deblocking filter 71 subjects the image output from the computing unit 70 to filtering. Thus, block distortion is removed. In step S20, the frame memory 72 stores the image subjected to filtering. Note that an image not subjected to filtering processing by the deblocking filter 71 is also supplied from the computing unit 70 to the frame memory 72 for storing.

In step S21, the intra prediction unit 74 and motion prediction/compensation unit 76 each perform image prediction processing. Specifically, in step S21, the intra prediction unit 74 performs intra prediction processing in the intra prediction mode. The motion prediction/compensation unit 76 performs motion prediction and compensation processing in the inter prediction mode.

At this time, the intra prediction unit 74 performs the intra prediction processing in the prediction mode according to the application mode information from the horizontal vertical prediction determining unit 75 regarding the intra $4 \times 4$ prediction mode.

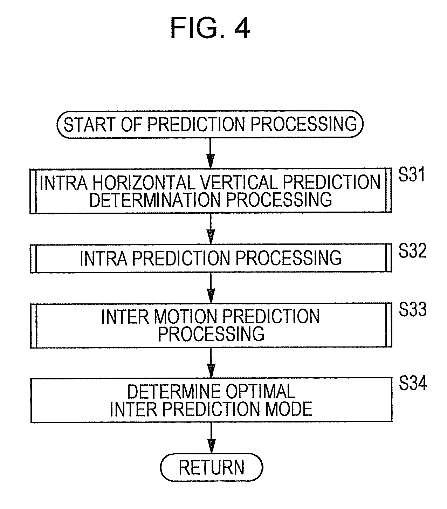

The details of the prediction processing in step S21 will be described later with reference to Fig. 4, but according to this processing, the prediction processes in all of the prediction modes serving as candidates are performed, and the cost function values in all of the prediction modes serving as candidates are calculated. The optimal intra prediction mode is selected based on the calculated cost function values, and the prediction image generated by the intra prediction in the optimal intra prediction mode, and the cost function value thereof are supplied to the prediction image selecting unit 77.

The optimal inter prediction mode is determined out of the inter prediction modes based on the calculated cost function values, and the prediction image generated in the optimal inter prediction mode, and the cost function value thereof are supplied to the prediction image selecting unit 77.

In step S22, the prediction image selecting unit 77 determines one of the optimal intra prediction mode and the optimal inter prediction mode to be the optimal prediction mode based on the cost function values output from the intra prediction unit 74 and the motion prediction/compensation unit 76. The prediction image selecting unit 77 then selects the prediction image in the determined optimal prediction mode, and supplies to the computing units 63 and 70. This prediction image is, as described above, used for calculations in steps S13 and S18.

Note that the selection information of this prediction image is supplied to the intra prediction unit 74 or motion prediction/compensation unit 76. In the event that the prediction image in the optimal intra prediction mode has been selected, the intra prediction unit 74 supplies information indicating the optimal intra prediction mode (i.e., intra prediction mode information) to the lossless encoding unit 66. At this time, in the event that the optimal intra prediction mode is the mode 0 or mode 1 of the intra $4 \times 4$ prediction mode applied by the horizontal vertical prediction determining unit 75, information indicating the optimal intra prediction mode is not supplied to the lossless encoding unit 66.

Specifically, in the event that the optimal intra prediction mode is the mode 0 or mode 1 of the intra $4 \times 4$ prediction mode applied by the horizontal vertical prediction determining unit 75, information indicating the intra $4 \times 4$ prediction mode for each macro block is transmitted to the decoding side. On the other hand, information indicating the mode 0 or mode 1 for each current block is not transmitted to the decoding side. Thus, the prediction mode information within the compressed image can be reduced.

In the event that the prediction image in the optimal inter prediction mode has been selected, the motion prediction/compensation unit 76 outputs information indicating the optimal inter prediction mode, and according to need, information according to the optimal inter prediction mode to the lossless encoding unit 66. Examples of the information according to the optimal inter prediction mode include motion vector information, flag information, and reference frame information. That is to say, when a prediction image according to the inter prediction mode as the optimal inter prediction mode is selected, the motion prediction/compensation unit 76 outputs inter prediction mode information, motion vector information, and reference frame information, to the lossless encoding unit 66.

In step S23, the lossless encoding unit 66 encodes the quantized transform coefficient output from the quantization unit 65. Specifically, the difference image is subjected to lossless encoding such as variable length coding, arithmetic coding, or the like, and compressed. At this time, the intra prediction mode information from the intra prediction unit 74, or the information according to the optimal inter prediction mode from the motion prediction/compensation unit 76, and so forth input to the lossless encoding unit 66 in step S22 are also encoded, and added to the header information.

In step S24, the accumulating buffer 67 accumulates the difference image as the compressed image. The compressed image accumulated in the accumulating buffer 67 is read out as appropriate, and transmitted to the decoding side via the transmission path.

In step S25, the rate control unit 78 controls the rate of the quantization operation of the quantization unit 65 based on the compressed image accumulated in the accumulating buffer 67 so as not to cause overflow or underflow.

Description of Prediction Processing

Next, the prediction processing in step S21 in Fig. 3 will be described with reference to the flowchart in Fig. 4.
In the event that the image to be processed, supplied from the screen sorting buffer 62, is an image in a block to be subjected to intra processing, the decoded image to be referenced is read out from the frame memory 72, and supplied to the intra prediction unit 74 via the switch 73.
The intra prediction unit 74 supplies the information (pixel value) of an adjacent pixel of the current block regarding the intra $4 \times 4$ prediction mode to the horizontal vertical prediction determining unit 75. In response to this, in step S31 the horizontal vertical prediction determining unit 75 performs intra horizontal vertical prediction determination processing.

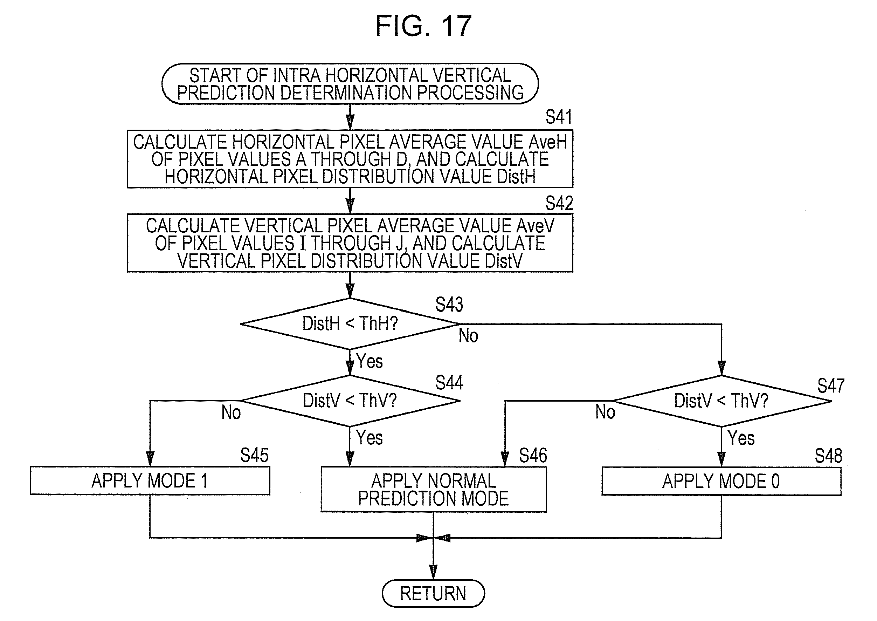

The details of the intra horizontal vertical prediction determination processing in step S31 will be described with reference to Fig. 17, but according to this processing, the mode 0 or mode 1 is applied to the current block regarding the intra 4 × 4 prediction mode as a prediction mode. In the event that the mode 0 or mode 1 has not been applied, the normal prediction mode is applied to the current block. The application mode information regarding this prediction mode is supplied to the intra prediction unit 74.

In step S32, the intra prediction unit 74 uses the supplied image to subject the pixels in the block to be processed to intra prediction using all of the intra prediction modes serving as candidates. Note that as a decoded pixel to be referenced, a pixel not subjected to deblocking filtering by the deblocking filter 71 is employed.

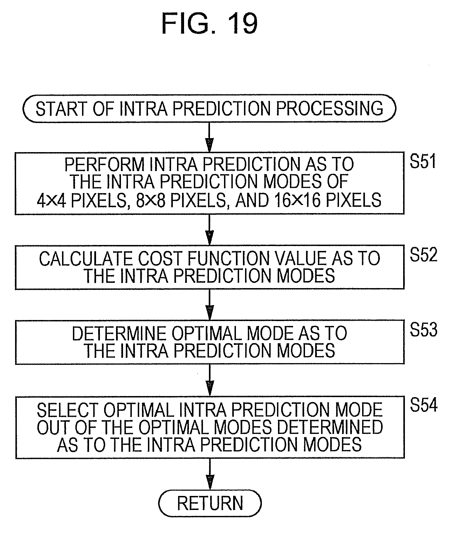

The details of the intra prediction processing in step S32 will be described later with reference to Fig. 19, but according to this processing, intra prediction is performed using all of the intra prediction modes serving as candidates. Note that, with regard to the intra 4 × 4 prediction mode, intra prediction processing is performed according to the application mode information from the horizontal vertical prediction determining unit 75.

A cost function value is then calculated as to all of the intra prediction modes serving as candidates, and the optimal intra prediction mode is then selected based on the calculated cost function values. The prediction image generated by the intra prediction in the optimal intra prediction mode, and the cost function value thereof are supplied to the prediction image selecting unit 77.

In the event that the image to be processed supplied from the screen sorting buffer 62 is an image to be subjected to inter processing, the image to be referenced is read out from the frame memory 72, and supplied to the motion prediction/compensation unit 76 via the switch 73.

In step S33, based on these images, the motion prediction/compensation unit 76 performs inter motion prediction processing. Specifically, the motion prediction/compensation unit 76 refer-ences the image supplied from the frame memory 72 to perform the motion prediction processing in all of the inter prediction modes serving as candidates.

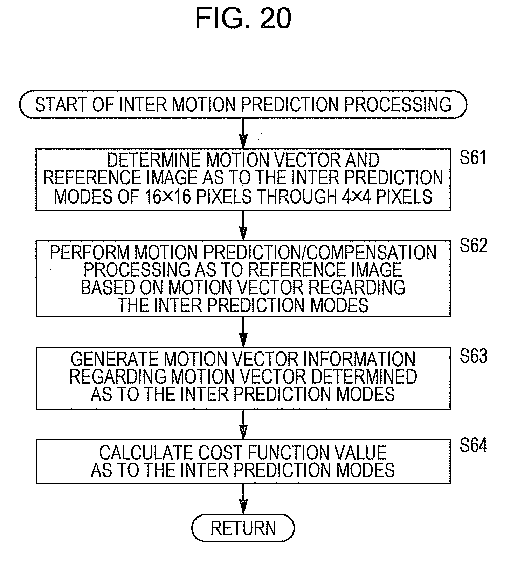

The details of the inter motion prediction processing in step S33 will be described later with reference to Fig. 20, but according to this processing, the motion prediction processing in all of the inter prediction modes serving as candidates is performed, and a cost function value as to all of the inter prediction modes serving as candidates is calculated.

In step S34, the motion prediction/compensation unit 76 compares the cost function values as to the inter prediction modes calculated in step S33, and determines the prediction mode that provides the minimum value, to be the optimal inter prediction mode. The motion prediction/compensation unit 76 then supplies the prediction image generated in the optimal inter prediction mode, and the cost function value thereof to the prediction image selecting unit 77.

Description of Intra prediction Processing According to H.264/AVC system

Next, the intra prediction modes determined by the H.264/AVC system will be described.

First, the intra prediction modes as to luminance signals will be described. With the intra prediction modes for luminance signals, three systems of an intra 4 × 4 prediction mode, an intra 8 × 8 prediction mode, and an intra 16 × 16 prediction mode are determined. These are modes for determining block units, and are set for each macro block. Also, an intra prediction mode may be set to color difference signals independently from luminance signals for each macro block.

Further, in the event of the intra 4 × 4 prediction mode, one prediction mode can be set out of the nine kinds of prediction modes for each 4 × 4-pixel current block. In the event of the intra 8 × 8 prediction mode, one prediction mode can be set out of the nine kinds of prediction modes for each 8 × 8-pixel current block. Also, in the event of the intra 16 × 16 prediction mode, one prediction mode can be set to a 16 × 16-pixel current macro block out of the four kinds of prediction modes.

Note that, hereafter, the intra 4 × 4 prediction mode, intra 8 × 8 prediction mode, and intra 16 × 16 prediction mode will also be referred to as 4 × 4-pixel intra prediction mode, 8 × 8-pixel intra prediction mode, and 16 × 16-pixel intra prediction mode as appropriate, respectively.

With the example in Fig. 5, numerals -1 through 25 appended to the blocks represent the bit stream sequence (processing sequence on the decoding side) of the blocks thereof. Note that, with regard to luminance signals, a macro block is divided into 4 × 4 pixels, and DCT of 4 × 4 pixels is performed. Only in the event of the intra 16 × 16 prediction mode, as shown in a block of -1, the DC components of the blocks are collected, a 4 × 4 matrix is generated, and this is further subjected to orthogonal transform.

On the other hand, with regard to color difference signals, after a macro block is divided into 4 × 4 pixels, and DCT of 4 × 4 pixels is performed, as shown in the blocks 16 and 17, the DC components of the blocks are collected, a 2 × 2 matrix is generated, and this is further subjected to orthogonal transform.

Note that, with regard to the intra 8 × 8 prediction mode, this may be applied to only a case where the current macro block is subjected to 8 × 8 orthogonal transform with a high profile or a profile beyond this.

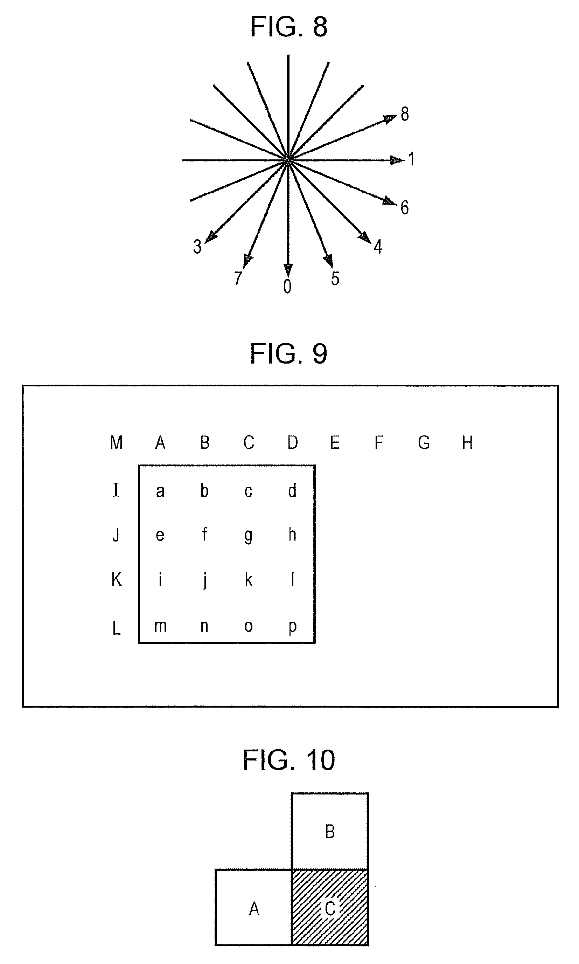

Fig. 6 and Fig. 7 are diagrams showing nine kinds of 4 × 4-pixel intra prediction modes (intra_4×4_pred_mode) for luminance signals. The eight kinds of modes other than the mode 2 showing average value (DC) prediction correspond to directions indicated with numbers 0, 1, 3 through 8 in Fig. 8, respectively.

The nine kinds of intra_4×4_pred_mode will be described with reference to Fig. 9. With the example in Fig. 9, pixels a through p represent the pixels of the current block to be subjected to intra processing, and pixel values A through M represent the pixel values of pixels belonging to an adjacent block. Specifically, the pixels a through p are an image to be processed read out from the screen sorting buffer 62, and the pixel values A through M are the pixel values of a decoded image to be read out from the frame memory 72 and referenced.

In the event of the intra prediction modes shown in Fig. 6 and Fig. 7, the prediction pixel values of the pixels a through p are generated as follows using the pixel values A through M of the pixels belonging to an adjacent pixel. Here, that a pixel value is "available" represents that the pixel value is available without a reason such that the pixel is positioned in the edge of the image frame, or has not been encoded yet. On the other hand, that a pixel value is "unavailable" represents that the pixel value is unavailable due to a reason such that the pixel is positioned in the edge of the image frame, or has not been encoded yet.

The mode 0 is a Vertical Prediction mode (vertical prediction mode), and is applied to only a case where the pixel values A through D are "available". In this case, the prediction pixel values of the pixels a through p are generated like the following Expression (1).

$$\text{Prediction pixel values of pixels a, e, i, and m} = A$$

$$\text{Prediction pixel values of pixels b, f, j, and n} = B$$

$$\text{Prediction pixel values of pixels c, g, k, and o} = C$$

$$\text{Prediction pixel values of pixels d, h, l, and p} = D \;.\;.\;.\;(1)$$

The mode 1 is a Horizontal Prediction mode (horizontal prediction mode), and is applied to only a case where the pixel values I through L are "available". In this case, the prediction pixel values of the pixels a through p are generated like the following Expression (2).

$$\text{Prediction pixel values of pixels a, b, c, and d} = I$$

$$\text{Prediction pixel values of pixels e, f, g, and h} = J$$

$$\text{Prediction pixel values of pixels i, j, k, and l} = K$$

$$\text{Prediction pixel values of pixels m, n, o, and p} = L \;.\;.\;.$$

$$(2)$$

The mode 2 is a DC Prediction mode, and the prediction pixel value is generated like Expression (3) when the pixel values A, B, C, D, I, J, K, and L are all "available".

$$(A + B + C + D + I + J + K + L + 4) >> 3 \;.\;.\;.\;(3)$$

Also, when the pixel values A, B, C, and D are all "unavailable", the prediction pixel value is generated like Expression (4).

$$(I + J + K + L + 2) >> 2 \;.\;.\;.\;(4)$$

Also, when the pixel values I, J, K, and L are all "unavailable", the prediction pixel value is generated like Expression (5).

$$(A + B + C + D + 2) >> 2 \quad . \; . \; . \quad (5)$$

Note that, when the pixel values A, B, C, D, I, J, K, and L are all "unavailable", 128 is employed as the prediction pixel value.

The mode 3 is a Diagonal_Down_Left Prediction mode, and is applied to only a case where the pixel values A, B, C, D, I, J, K, L, and M are "available". In this case, the prediction pixel values of the pixels a through p are generated like the following Expression (6).

```
Prediction pixel value of pixel a = (A + 2B + C + 2) >> 2

Prediction pixel values of pixels b and e = (B + 2C + D + 2)

>> 2

Prediction pixel values of pixels c, f, and i = (C + 2D + E

+ 2) >> 2

Prediction pixel values of pixels d, g, j, and m = (D + 2E +

F + 2) >> 2

Prediction pixel values of pixels h, k, and n = (E + 2F + G

+ 2) >> 2

Prediction pixel values of pixels l and o = (F + 2G + H + 2)

>> 2

Prediction pixel value of pixel p = (G + 3H + 2) >> 2 . . .

(6)
```

The mode 4 is a Diagonal_Down_Right Prediction mode, and is applied to only a case where the pixel values A, B, C, D, I, J, K, L, and M are "available". In this case, the prediction pixel values of the pixels a through p are generated like the following Expression (7).

```
Prediction pixel value of pixel m = (J + 2K + L + 2) >> 2
Prediction pixel values of pixels i and n = (I + 2J + K + 2)
>> 2
Prediction pixel values of pixels e, j, and o = (M + 2I + J
+ 2) >> 2
Prediction pixel values of pixels a, f, k, and p = (A + 2M +
I + 2) >> 2
Prediction pixel values of pixels b, g, and l = (M + 2A + B
+ 2) >> 2
Prediction pixel values of pixels c and h = (A + 2B + C + 2)
>> 2
Prediction pixel value of pixel d = (B + 2C + D + 2) >>
2 . . . (7)
```

The mode 5 is a Diagonal_Vertical_Right Prediction mode, and is applied to only a case where the pixel values A, B, C, D, I, J, K, L, and M are "available". In this case, the prediction pixel values of the pixels a through p are generated like the following Expression (8).

```
Prediction pixel values of pixels a and j = (M + A + 1) >> 1

Prediction pixel values of pixels b and k = (A + B + 1) >> 1

Prediction pixel values of pixels c and l = (B + C + 1) >> 1

Prediction pixel value of pixel d = (C + D + 1) >> 1

Prediction pixel values of pixels e and n = (1 + 2M + A + 2)

>> 2

Prediction pixel values of pixels f and o = (M + 2A + B + 2)

>> 2

Prediction pixel values of pixels g and p = (A + 2B + C + 2)

>> 2

Prediction pixel value of pixel h = (B + 2C + D + 2) >> 2

Prediction pixel value of pixel i = (M + 2I + J + 2) >> 2

Prediction pixel value of pixel m = (I + 2J + K + 2) >>

2  . . . (8)
```

The mode 6 is a Horizontal_Down Prediction mode, and is applied to only a case where the pixel values A, B, C, D, I, J, K, L, and M are "available". In this case, the prediction pixel values of the pixels a through p are generated like the following Expression (9).

```
Prediction pixel values of pixels a and g = (M + I + 1) >> 1

Prediction pixel values of pixels b and h = (I + 2M + A + 2)

>> 2

Prediction pixel value of pixel c = (M + 2A + B + 2) >> 2

Prediction pixel value of pixel d = (A + 2B + C + 2) >> 2
```

```
Prediction pixel values of pixels e and k = (I + J + 1) >> 1
Prediction pixel values of pixels f and l = (M + 2I + J + 2)
>> 2
Prediction pixel values of pixels i and o = (J + K + 1) >> 1
Prediction pixel values of pixels j and p = (I + 2J + K + 2)
>> 2
Prediction pixel value of pixel m = (K + L + 1) >> 1
Prediction pixel value of pixel n = (J + 2K + L + 2) >>
2 . . . (9)
```

The mode 7 is a Vertical_Left Prediction mode, and is applied to only a case where the pixel values A, B, C, D, I, J, K, L, and M are "available". In this case, the prediction pixel values of the pixels a through p are generated like the following Expression (10).

```
Prediction pixel value of pixel a = (A + B + 1) >> 1
Prediction pixel values of pixels b and i = (B + C + 1) >> 1
Prediction pixel values of pixels c and j = (C + D + 1) >> 1
Prediction pixel values of pixels d and k = (D + E + 1) >> 1
Prediction pixel value of pixel l = (E + F + 1) >> 1
Prediction pixel value of pixel e = (A + 2B + C + 2) >> 2
Prediction pixel values of pixels f and m = (B + 2C + D + 2)
>> 2
Prediction pixel values of pixels g and n = (C + 2D + E + 2)
>> 2

Prediction pixel values of pixels h and o = (D + 2E + F + 2)
>> 2
Prediction pixel value of pixel p = (E + 2F + G + 2) >>
2 . . . (10)
```

The mode 8 is a Horizontal_Up Prediction mode, and is applied to only a case where the pixel values A, B, C, D, I, J, K, L, and M are "available". In this case, the prediction pixel values of the pixels a through p are generated like the following Expression (11).

```
Prediction pixel value of pixel a = (I + J + 1) >> 1

Prediction pixel value of pixel b = (I + 2J + K + 2) >> 2

Prediction pixel values of pixels c and e = (J + K + 1) >> 1

Prediction pixel values of pixels d and f = (J + 2K + L + 2)

>> 2

Prediction pixel values of pixels g and i = (K + L + 1) >> 1

Prediction pixel values of pixels h and j = (K + 3L + 2) >>

2

Prediction pixel values of pixels k, l, m, n, o, and p =

L  . . . (11)
```

Next, the encoding system of the 4 × 4-pixel intra prediction mode (Intra_4×4_pred_mode) for luminance signals will be described with reference to Fig. 10. With the example in Fig. 10, a current block C serving as an encoding object, which is made up of 4 × 4 pixels, is shown, and a block A and a block B, which are adjacent to the current block C and are made up of 4 × 4 pixels, are shown.

In this case, it can be conceived that the Intra_4×4_pred_mode in the current block C, and the Intra_4×4_pred_mode in the block A and block B have high correlation. Encoding processing is performed as follows using this correlation, whereby higher encoding efficiency can be realize.

Specifically, with the example in Fig. 10, the Intra_4×4_pred_mode in the block A and block B are taken as Intra_4×4_pred_modeA and Intra_4×4_pred_modeB respectively, and MostProbableMode is defined as the following Expression (12).

```
MostProbableMode = Min(Intra_4×4_pred_modeA,

Intra_4×4_pred_modeB)  . . . (12)
```

That is to say, of the block A and block B, one to which a smaller mode_number is assigned is taken as MostProbableMode.

Two values called as prev_intra4×4_pred_mode_flag[luma4×4Blkldx] are defined within a bit stream as parameters as to the current block C, and decoding processing is performed by processing based on the pseudo-code shown in the following Expression (13), whereby the values of Intra_4×4_pred_mode and Intra4×4PredMode[luma4×4Blkldx] as to the block C can be obtained.

```
If(prev_intra4x4_pred_mode_flag[luma4x4Blkldx])

        Intra4x4PredMode[luma4x4Blkldx] = MostProbableMode

    else

        if(rem_intra4x4_pred_mode[luma4x4Blkldx] <

MostProbableMode)

        Intra4x4PredMode[luma4x4Blkldx] =

rem_intra4x4_pred_mode[luma4x4Blkldx]

            else

        Intra4x4PredMode[luma4x4Blkldx] =

rem_intra4x4_pred_mode[luma4x4Blkldx] + 1   . . . (13)
```

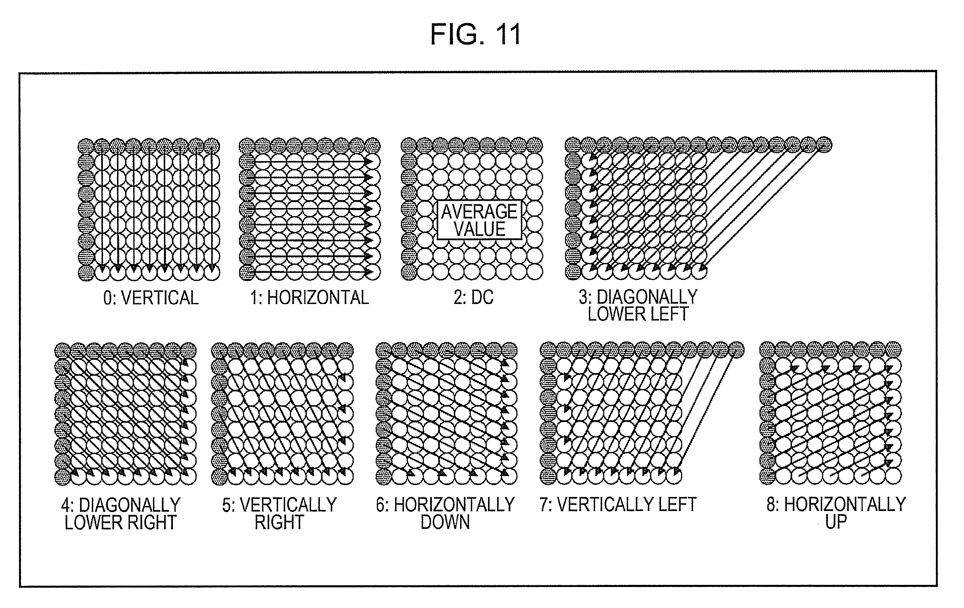

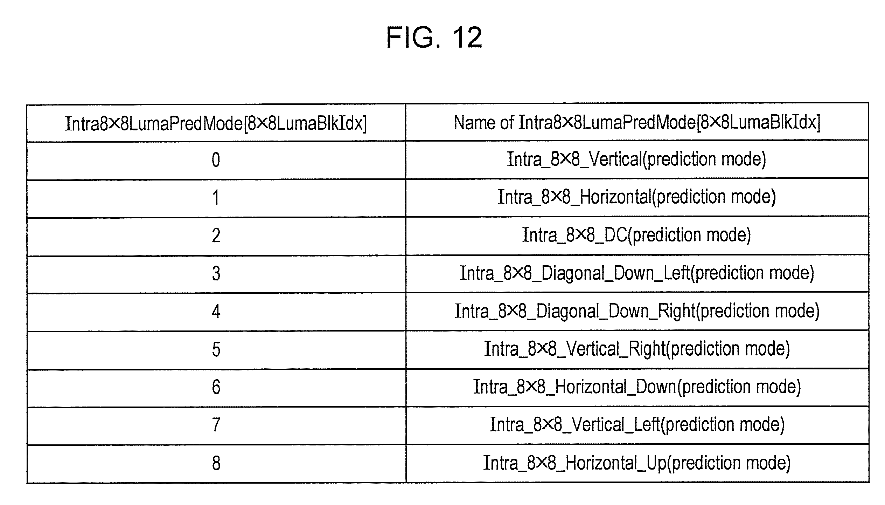

Next, the $8 \times 8$-pixel intra prediction mode will be described. Fig. 11 and Fig. 12 are diagrams showing the nine kinds of $8 \times 8$-pixel intra prediction modes (intra_8x8_pred_mode) for luminance signals.

Let us say that the pixel values in the current $8 \times 8$ block are taken as p[x, y]($0 \leq x \leq 7$; $0 \leq y \leq 7$), and the pixel values of an adjacent block are represented like p[-1, -1]...., p[-1, 15], p[-1, 0], ..., [p-1, 7].

With regard to the $8 \times 8$-pixel intra prediction modes, adjacent pixels are subjected to low-pass filtering processing prior to generating a prediction value. Now, let us say that pixel values before low-pass filtering processing are represented with p[-1, -1], ..., p[-1, 15], p[-1, 0], ..., p[-1, 7], and pixel values after the processing are represented with p'[-1, -1], ..., -p' [-1, 15], p' [-1, 0], ..., p'[-1, 7].

First, p'[0, -1] is calculated like the following Expression (14) in the event that p[-1, -1] is "available", and calculated like the following Expression (15) in the event of "not available".

```
p'[0, -1] = (p[-1, -1] + 2*p[0, -1] + p[1, -1] + 2) >>

2  . . . (14)

p'[0, -1] = (3*p[0, -1] + p[1, -1] + 2) >> 2  . . . (15)
```

```
    p'[x, -1] (x = 0, …, 7) is calculated like the

following Expression (16).

p'[x, -1] = (p[x-1, -1] + 2*p[x, -1] + p[x+1, -1] + 2) >>

2  . . . (16)
```

p' [x, -1] (x = 8, ..., 15) is calculated like the following Expression (17) in the event that p[x, -1] (x = 8, ..., 15) is "available".

$$p'[x, -1] = (p[x-1, -1] + 2*p[x, -1] + p[x+1, -1] + 2) >> 2$$

$$p'[15, -1] = (p[14, -1] + 3*p[15, -1] + 2) >> 2 \quad . . . (17)$$

p'[-1, -1] is calculated as follows in the event that p[-1, -1] is "available". Specifically, p'[-1, -1] is calculated like Expression (18) in the event that both of p [0, -1] and p[-1, 0] are "available", and calculated like Expression (19) in the event that p[-1, 0] is "unavailable". Also, p'[-1, -1] is calculated like Expression (20) in the event that p[0, -1] is "unavailable".

$$p'[-1, -1] = (p[0, -1] + 2*p[-1, -1] + p[-1, 0] + 2) >>$$
$$2 \quad . . . (18)$$

$$p'[-1, -1] = (3*p[-1, -1] + p[0, -1] + 2) >> 2 \quad . . . (19)$$

$$p'[-1, -1] = (3*p[-1, -1] + p[-1, 0] + 2) >> 2 \quad . . . (20)$$

p'[-1, y] (y = 0, ..., 7) is calculated as follows when p[-1, y] (y = 0, ..., 7) is "available". Specifically, first, in the event that p[-1, -1] is "available", p'[-1, 0] is calculated like the following Expression (21), and in the event of "unavailable", calculated like Expression (22).

$$p'[-1, 0] = (p[-1, -1] + 2*p[-1, 0] + p[-1, 1] + 2) >>$$
$$2 \quad . . . (21)$$

$$p'[-1, 0] = (3*p[-1, 0] + p[-1, 1] + 2) >> 2 \quad . . . (22)$$

Also, p'[-1, y] (y = 1, ..., 6) is calculated like the following Expression (13), and p'[-1, 7] is calculated like Expression (24).

$$p[-1, y] = (p[-1, y-1] + 2*p[-1, y] + p[-1, y+1] + 2) >>$$
$$2 \quad . . . (23)$$

$$p'[-1, 7] = (p[-1, 6] + 3*p[-1, 7] + 2) >> 2 \quad . . . (24)$$

Prediction values in the intra prediction modes shown in Fig. 11 and Fig. 12 are generated as follows using p' thus calculated.

The mode 0 is a Vertical Prediction mode, and is applied only when p[x, -1] (x = 0, ..., 7) is "available". A prediction value pred8×8$_L$[x, y] is generated like the following Expression (25).

$$pred8 \times 8_L[x, y] = p'[x, -1] \quad x, y = 0, ..., 7 \quad . . . (25)$$

The mode 1 is a Horizontal Prediction mode, and is applied only when p[-1, y] (y = 0, ..., 7) is "available". The prediction value pred8×8$_L$[x, y] is generated like the following Expression (26).

$$\text{pred8×8}_L[x, y] = p'[-1, y] \quad x, y = 0, ..., 7 \quad . \; . \; . \; (26)$$

The mode 2 is a DC Prediction mode, and the prediction value pred8×8$_L$[x, y] is generated as follows. Specifically, in the event that both of p[x, -1] (x = 0, ..., 7) and p[-1, y] (y = 0, ..., 7) are "available", the prediction value pred8×8$_L$[x, y] is generated like the following Expression (27).
[Math. 1]

$$\text{Pred8x8}_L[x, y] = (\sum_{x'=0}^{7} P'[x',-1] + \sum_{y'=0}^{7} P'[-1,y] + 8) >> 4 \quad \cdots (27)$$

In the event that p[x, -1] (x = 0, ..., 7) is "available", but p[-1, y] (y = 0, ..., 7) is "unavailable", the prediction value pred8×8$_L$[x, y] is generated like the following Expression (28).
[Math. 2]

$$\text{Pred8x8}_L[x, y] = (\sum_{x'=0}^{7} P'[x',-1] + 4) >> 3 \quad \cdots (28)$$

In the event that p[x, -1] (x = 0, ..., 7) is "unavailable", but p[-1, y] (y = 0, ..., 7) is "available", the prediction value pred8×8$_L$[x, y] is generated like the following Expression (29).
[Math. 3]

$$\text{Pred8x8}_L[x, y] = (\sum_{y'=0}^{7} P'[-1,y] + 4) >> 3 \quad \cdots (29)$$

In the event that both of p[x, -1] (x = 0, ..., 7) and p[-1, y] (y = 0, ..., 7) are "unavailable", the prediction value pred8×8$_L$[x, y] is generated like the following Expression (30).

$$\text{pred8×8}_L[x, y] = 128 \quad . \; . \; . \; (30)$$

Here, Expression (30) represents a case of 8-bit input.
The mode 3 is a Diagonal_Down_Left_prediction mode, and the prediction value pred8×8$_L$[x, y] is generated as follows. Specifically, the Diagonal_Down_Left_prediction mode is applied only when p[x, -1], x = 0, ..., 15, is "available", and the prediction pixel value with x =7 and y =7 is generated like the following Expression (31), and other prediction pixel values are generated like the following Expression (32).

$$\text{pred8×8}_L[x, y] = (p'[14, -1] + 3*p[15, -1] + 2) >> 2 \ . \ . \ .$$

$$(31)$$

$$\text{pred8×8}_L[x, y] = (p'[x+y, -1] + 2*p'[x+y+1, -1] + p'[x+y+2, -1] + 2) >> 2 \ . \ . \ . \ (32)$$

The mode 4 is a Diagnonal_Down_Right_prediction mode, and the prediction value pred8×8$_L$[x, y] is generated as follows. Specifically, the Diagnonal_Down_Right__prediction mode is applied only when p [x, -1], x = 0, ..., 7 and p [-1, y], y = 0, ..., 7 are "available", the prediction pixel value with x > y is generated like the following Expression (33), and the prediction pixel value with x < y is generated like the following Expression (34). Also, the prediction pixel value with x = y is generated like the following Expression (35).

$$\text{pred8×8}_L[x, y] = (p'[x-y-2, -1] + 2*p'[x-y-1, -1] + p'[x-y, -1] + 2) >> 2 \ . \ . \ . \ (33)$$

$$\text{pred8×8}_L[x, y] = (p'[-1, y-x-2] + 2*p'[-1, y-x-1] + p'[-1, y-x] + 2) >> 2 \ . \ . \ . \ (34)$$

$$\text{pred8×8}_L[x, y] = (p'[0, -1] + 2*p'[-1, -1] + p'[-1, 0] + 2) >> 2 \ . \ . \ . \ (35)$$

The mode 5 is a Vertical_Right_prediction mode, and the prediction value pred8×8$_L$[x, y] is generated as follows. Specifically, the Vertical_Right_prediction mode is applied only when p[x, -1], x = 0, ..., 7 and p [-1, y], y = -1, ..., 7 are "available". Now, zVR is defined like the following Expression (36).

$$zVR = 2*x - y \qquad . \ . \ . \ (36)$$

At this time, in the event that zVR is 0, 2, 4, 6, 8, 10, 12, or 14, the pixel prediction value is generated like the following Expression (37), and in the event that zVR is 1, 3, 5, 7, 9, 11, or 13, the pixel prediction value is generated like the following Expression (38)

$$\text{pred8×8}_L[x, y] = (p'[x-(y>>1)-1, -1] + p'[x-(y>>1), -1] + 1) >> 1 \ . \ . \ . \ (37)$$

$$\text{pred8×8}_L[x, y] = (p'[x-(y>>1)-2, -1] + 2*p'[x-(y>>1)-1, -1] + p'[x-(y>>1), -1] + 2) >> 2 \ . \ . \ . \ (38)$$

Also, in the event that zVR is -1, the pixel prediction value is generated like the following Expression (39), and in the cases other than this, specifically, in the event that zVR is -2, -3, -4, -5, -6, or -7, the pixel prediction value is generated like the following Expression (40).

$$\text{pred8×8}_L[x, y] = (p'[-1, 0] + 2*p'[-1, -1] + p'[0, -1] + 2)$$
$$>> 2 \quad . \quad . \quad . \quad (39)$$

$$\text{pred8×8}_L[x, y] = (p'[-1, y-2*x-1] + 2*p'[-1, y-2*x-2] + p'[-1,$$
$$y-2*x-3] + 2) >> 2 \quad . \quad . \quad . \quad (40)$$

The mode 6 is a Horizontal_Down_prediction mode, and the prediction value pred8×8$_L$[x, y] is generated as follows. Specifically, the Horizontal_Down_prediction mode is applied only when p [x, -1], x = 0, ..., 7 and p[-1, y], y = -1, ..., 7 are "available". Now, zVR is defined like the following Expression (41).

$$zHD = 2*y - x \quad . \quad . \quad . \quad (41)$$

At this time, in the event that zHD is 0, 2, 4, 6, 8, 10, 12, or 14, the prediction pixel value is generated like the following Expression (42), and in the event that zHD is 1, 3, 5, 7, 9, 11, or 13, the prediction pixel value is generated like the following Expression (43).

$$\text{pred8×8}_L[x, y] = (p'[-1, y-(x>>1)-1] + p'[-1, y-(x>>1) + 1]$$
$$>> 1 \quad . \quad . \quad . \quad (42)$$

$$\text{pred8×8}_L[x, y] = (p'[-1, y-(x>>1)-2] + 2*p'[-1, y-(x>>1)-1] +$$
$$p'[-1, y-(x>>1)] + 2) >> 2 \quad . \quad . \quad . \quad (43)$$

Also, in the event that zHD is -1, the prediction pixel value is generated like the following Expression (44), and in the event that zHD is other than this, specifically, in the event that zHD is -2, -3, -4, -5, -6, or -7, the prediction pixel value is generated like the following Expression (45).

$$\text{pred8×8}_L[x, y] = (p'[-1, 0] + 2*p'[-1, -1] + p'[0, -1] + 2)$$
$$>> 2 \quad . \quad . \quad . \quad (44)$$

$$\text{pred8×8}_L[x, y] = (p'[x-2*Y-1, -1] + 2*p'[x-2*y-2, -1] + p'[x-$$
$$2*y-3, -1] + 2) >> 2 \quad . \quad . \quad . \quad (45)$$

The mode 7 is a Vertical_Left_prediction mode, and the prediction value pred8×8$_L$[x, y] is generated as follows. Specifically, the Vertical_Left_prediction mode is applied only when p[x, -1], x = 0, ..., 15, is "available", in the case that y = 0, 2, 4, or 6, the prediction pixel value is generated like the following Expression (46), and in the cases other than this, i.e., in the case that y = 1, 3, 5, or 7, the prediction pixel value is generated like the following Expression (47).

$$\text{pred8×8}_\text{L}[\text{x, y}] = (\text{p'}[\text{x+(y>>1), -1}] + \text{p'}[\text{x+(y>>1)+1, -1}] + 1)$$
$$>> 1 \ . \ . \ . \ (46)$$

$$\text{pred8×8}_\text{L}[\text{x, y}] = (\text{p'}[\text{x+(y>>1), -1}] + 2*\text{p'}[\text{x+(y>>1)+1, -1}] +$$
$$\text{p'}[\text{x+(y>>1)+2, -1}] + 2) >> 2 \ . \ . \ . \ (47)$$

The mode 8 is a Horizontal__Up_prediction mode, and the prediction value pred8×8$_\text{L}$[x, y] is generated as follows. Specifically, the Horizontal_Up_prediction mode is applied only when p[-1, y], y = 0, ..., 7, is "available". Hereafter, zHU is defined like the following Expression (48).

$$\text{zHU} = \text{x} + 2*\text{y} \ \ \ \ \ . \ . \ . \ (48)$$

In the event that the value of zHU is 0, 2, 4, 6, 8, 10, 12, the prediction pixel value is generated like the following Expression (49), and in the event that the value of zHU is 1, 3, 5, 7, 9, or 11, the prediction pixel value is generated like the following Expression (50).

$$\text{pred8×8}_\text{L}[\text{x, y}] = (\text{p'}[-1, \text{y+(x>>1)}] + \text{p'}[-1, \text{y+(x>>1)+1}] + 1)$$
$$>> 1 \ . \ . \ . \ (49)$$

$$\text{pred8×8}_\text{L}[\text{x, y}] = (\text{p'}[-1, \text{y+(x>>1)}]) \ . \ . \ . \ (50)$$

Also, in the event that the value of zHU is 13, the prediction pixel value is generated like the following Expression (51), and in the cases other than this, i.e., in the event that the value of zHU is greater than 13, the prediction pixel value is generated like the following Expression (52).

$$\text{pred8×8}_\text{L}[\text{x, y}] = (\text{p'}[-1, 6] + 3*\text{p'}[-1, 7] + 2) >> 2 \ . \ . \ .$$
$$(51)$$

$$\text{pred8×8}_\text{L}[\text{x, y}] = \text{p'}[-1, 7] \ . \ . \ . \ (52)$$

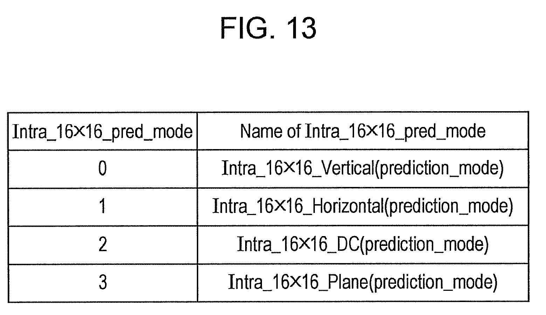

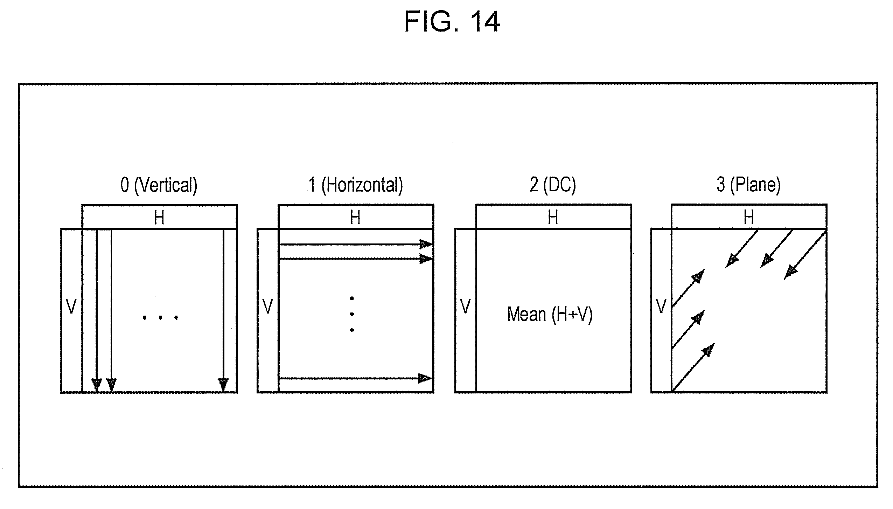

Next, the 16 × 16-pixel intra prediction mode will be described. Fig. 13 and Fig. 14 are diagrams showing the four kinds of the 16 × 16-pixel intra prediction modes for luminance signals (Intra__16xl6_pred_mode).

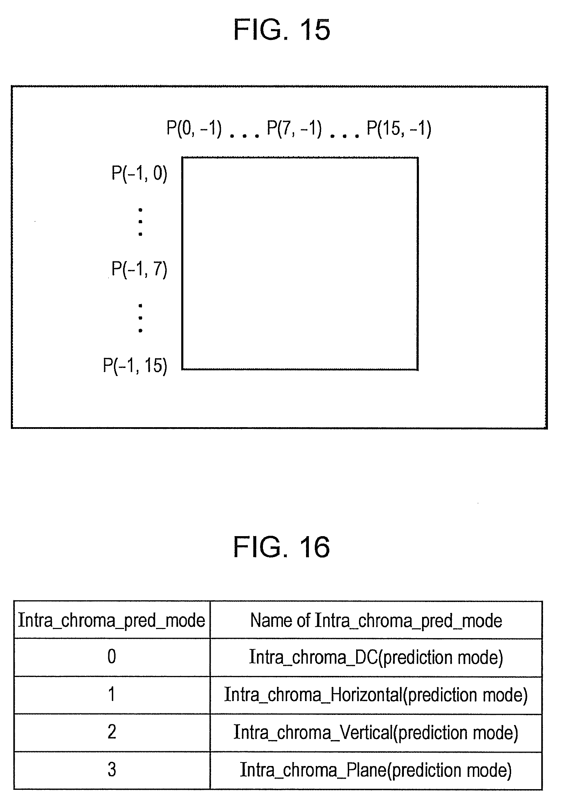

The four types of intra prediction modes will be described with reference to Fig. 15. With the example in Fig. 15, a current macro block A to be subjected to intra processing is shown, and P(x, y); x, y = -1, 0, ..., 15 represents the pixel value of a pixel adjacent to the current macro block A.

The mode 0 is a Vertical Prediction mode, and is applied only when P(x, -1); x, y = -1, 0, ..., 15 is "available". In this case, the prediction pixel value Pred(x, y) of each pixel of the current macro block A is generated like the following Expression (53).

```
Pred(x, y) = P(x, -1); x, y = 0, …, 15    . . . (53)
```

The mode 1 is a Horizontal Prediction mode, and is applied only when P(-1, y); x, y = -1, 0, ..., 15 is "available". In this case, the prediction pixel value Pred(x, y) of each pixel of the current macro block A is generated like the following Expression (54).

```
Pred(x, y) = P(-1, y); x, y = 0, …, 15    . . . (54)
```

The mode 2 is a DC Prediction mode, and in the case that all of P(x, -1) and P(-1, y); x, y = -1, 0, ..., 15 are "available", the prediction pixel value Pred(x, y) of each pixel of the current macro block A is generated like the following Expression (55).
[Math. 4]

$$Pred(x, y) = [\sum_{x'=0}^{15} P(x', -1) + \sum_{y'=0}^{15} P(-1, y') + 16] >> 5$$
$$\text{with } x, y = 0, \cdots, 15 \quad \cdots (55)$$

Also, in the event that P(x, -1); x, y = -1, 0, ..., 15 is "unavailable", the prediction pixel value Pred(x, y) of each pixel of the current macro block A is generated like the following Expression (56).
[Math. 5]

$$Pred(x, y) = [\sum_{y'=0}^{15} P(-1, y') + 8] >> 4 \quad \text{with } x, y = 0, \cdots, 15 \quad \cdots (56)$$

In the event that P(-1, y); x, y = -1, 0, ..., 15 is "unavailable", the prediction pixel value Pred(x, y) of each pixel of the current macro block A is generated like the following Expression (57).
[Math. 6]

$$Pred(x, y) = [\sum_{y'=0}^{15} P(x', -1) + 8] >> 4 \quad \text{with } x, y = 0, \cdots, 15 \quad \cdots (57)$$

In the event that all of P(x, -1) and P(-1, y); x, y = -1, 0, ..., 15 are "unavailable", 128 is employed as the prediction pixel value.
The mode 3 is a Plane Prediction mode, and is applied only when all of P(x, -1) and P(-1, y); x, y = -1, 0, ..., 15 are "available". In this case, the prediction pixel value Pred(x, y) of each pixel of the current macro block A is generated like the following Expression (58).
[Math. 7]

$$Pred(x,y) = Clip1((a+b \cdot (x-7)+c \cdot (y-7)+16) >> 5)$$
$$a = 16 \cdot (P(-1,15)+P(15,-1))$$
$$b = (5 \cdot H+32) >> 6$$
$$c = (5 \cdot V+32) >> 6$$
$$H = \sum_{x=1}^{8} x \cdot (P(7+x,-1)-P(7-x,-1))$$
$$V = \sum_{y=1}^{8} y \cdot (P(-1,7+y)-P(-1,7-y)) \qquad \cdots(58)$$

Next, the intra prediction modes as to color difference signals will be described. Fig. 16 is a diagram showing the four kinds of intra prediction modes for color difference signals (Intra_chroma_pred_mode). The intra prediction modes for color difference signals may be set independently from the intra prediction modes for luminance signals. The intra prediction modes as to color difference signals conform to the above-mentioned 16 $\times$ 16-pixel intra prediction modes for luminance signals.

However, the 16 $\times$ 16-pixel intra prediction modes for luminance signals take a 16 $\times$ 16-pixel block as the object, but on the other hand, the intra prediction modes as to color difference signals take an 8 $\times$ 8-pixel block as the object. Further, as shown in the above-mentioned Fig. 13 and Fig. 16, mode numbers between both do not correspond.

Now, let us conform to the definitions of the pixel values of the current block A in the 16 $\times$ 16-pixel intra prediction mode for the luminance signal described above with reference to Fig. 15, and an adjacent pixel value. For example, let us say that the pixel value of a pixel adjacent to the current macro block A (8 $\times$ 8 pixels in the event of color difference signal) to be subjected to intra processing is taken as P(x, y); x, y = -1, 0, ..., 7.

The mode 0 is a DC Prediction mode, and in the event that all of P(x, -1) and P(-1, y); x, y = -1, 0, ..., 7 are "available", the prediction pixel value Pred(x, y) of each pixel of the current macro block A is generated like the following Expression (59).

[Math. 8]

$$Pred(x, y) = \left( \left( \sum_{n=0}^{7} (P(-1,n)+P(n,-1)) \right)+8 \right) >> 4$$
$$\text{with } x, y = 0, \cdots, 7 \qquad \cdots(59)$$

Also, in the event that P(-1, y); x, y = -1, 0, ..., 7 is "unavailable", the prediction pixel value Pred(x, y) of each pixel of the current macro block A is generated like the following Expression (60).

[Math. 9]

$$Pred(x, y) = \left[ \left( \sum_{n=0}^{7} P(n,-1) \right)+4 \right] >> 3 \text{ with } x, y = 0, \cdots, 7 \qquad \cdots(60)$$

Also, in the event that P(x, -1); x, y = -1, 0, ..., 7 is "unavailable", the prediction pixel value Pred(x, y) of each pixel of the current macro block A is generated like the following Expression (61).
[Math. 10]

$$\text{Pred}(x, y) = \left[\left(\sum_{n=0}^{7} P(-1, n)\right) + 4\right] >> 3 \text{ with } x, y = 0, \cdots, 7 \quad \cdots(61)$$

The mode 1 is a Horizontal Prediction mode, and is applied only when P(-1, y); x, y = -1, 0, ..., 7 is "available". In this case, the prediction pixel value Pred(x, y) of each pixel of the current macro block A is generated like the following Expression (62).

$$\text{Pred}(x, y) = P(-1, y); \ x, y = 0, \dots, 7 \quad \dots (62)$$

The mode 2 is a Vertical Prediction mode, and is applied only when P(x, -1); x, y = -1, 0, ..., 7 is "available". In this case, the prediction pixel value Pred(x, y) of each pixel of the current macro block A is generated like the following Expression (63).

$$\text{Pred}(x, y) = P(x, -1); \ x, y = 0, \dots, 7 \quad \dots (63)$$

The mode 3 is a Plane Prediction mode, and is applied only when P(x, -1) and P(-1, y); x, y = -1, 0, ..., 7 are "available". In this case, the prediction pixel value Pred(x, y) of each pixel of the current macro block A is generated like the following Expression (64).
[Math. 11]

$$\text{Pred}(x,y) = \text{Clip1}(a + b \cdot (x-3) + c \cdot (y-3) + 16) >> 5; x, y = 0, \dots, 7$$

$$a = 16 \cdot (P(-1,7) + P(7,-1))$$

$$b = (17 \cdot H + 16) >> 5$$

$$c = (17 \cdot V + 16) >> 5$$

$$H = \sum_{x=1}^{4} x \cdot [P(3+x,-1) - P(3-x,-1)]$$

$$V = \sum_{y=1}^{4} y \cdot [P(-1,3+y) - P(-1,3-y)] \quad \cdots(64)$$

As described above, the intra prediction modes for luminance signals include the nine kinds of prediction modes of 4 × 4-pixel and 8 × 8-pixel block units, and the four kinds of prediction modes of 16 × 16-pixel macro block units. The modes of these block units are set for each macro block unit. The intra prediction modes for color difference signals include the four kinds of prediction modes of 8 × 8-pixel block units. The intra prediction modes for color difference signals may be set independently from the intra prediction modes for luminance signals.

Also, with regard to the 4 × 4-pixel intra prediction modes (intra 4 × 4 prediction modes), and the 8 × 8-pixel intra prediction modes (intra 8 × 8 prediction modes) for luminance signals, one intra prediction mode is set for each 4 × 4-pixel and 8 × 8-pixel luminance signal block. With regard to the 16 × 16-pixel intra prediction mode (intra 16 × 16 prediction mode) for luminance signals and the intra prediction modes for color difference signals, one prediction mode is set as to one macro block.

Note that the kinds of prediction modes correspond to directions indicated with the above-mentioned numbers 0, 1, 3 through 8 in Fig. 8. The prediction mode 2 is average value prediction.

Here, with the above-mentioned intra prediction modes (intra 4 × 4 prediction modes, intra 8 × 8 prediction modes, intra 16 × 16 prediction modes, and prediction modes for color difference signals), mode numbers (CodeNumber) representing the kind of a prediction mode are arrayed in the sequence of frequency of usage. This specifically represents that the smaller a number representing the kind of prediction mode is, the higher the frequency of usage of the corresponding prediction mode is.

Description of Intra Horizontal Vertical Determination Processing

Next, the intra horizontal vertical prediction determination processing in step S31 in Fig. 4 will be described with reference to the flowchart in Fig. 17. Note that, with the example in Fig. 17, in order to make description understandable, description will be made with reference to the above-mentioned Fig. 9 as appropriate.

In step S41, the horizontally adjacent pixel averaging unit 81 calculates a horizontal pixel average value AveH of the pixel values A through D in Fig. 9, and the horizontally adjacent pixel distribution calculating unit 83 uses the horizontal pixel average value AveH to calculate a horizontal pixel distribution value DistH.

If the processing in step S41 will specifically be described, the pixel value of an upper adjacent pixel of the current block in the event of the intra 4 × 4 prediction mode is input from the intra prediction unit 74 to the horizontally adjacent pixel averaging unit 81. For example, in the event that the pixels a through p in Fig. 9 represent the pixels of the current block, the pixel values A through D of pixels adjacent to the upper portion of the current block are input to the horizontally adjacent pixel averaging unit 81.

The horizontally adjacent pixel averaging unit 81 uses the pixel values A through D to calculate a horizontal pixel average value AveH, and supplies the calculated horizontal pixel average value AveH to the horizontally adjacent pixel distribution calculating unit 83. The horizontally adjacent pixel distribution calculating unit 83 uses the horizontal pixel average value AveH to calculate a horizontal pixel distribution value DistH, and supplies the calculated horizontal pixel distribution value DistH to the prediction mode application determining unit 85. In response to this, the prediction mode application determining unit 85 receives the horizontal pixel distribution value DistH from the horizontally adjacent pixel distribution calculating unit 83.

In step S42, the vertically adjacent pixel averaging unit 82 calculates a vertical pixel average value AveV of the pixel values I through J in Fig. 9, and the vertical adjacent pixel distribution calculating unit 84 uses the vertical pixel average value AveV to calculate a vertical pixel distribution value DistV.

If the processing in step S42 will specifically be described, the pixel value of a pixel adjacent to the left of the current block in the event of intra 4 × 4 is input from the intra prediction unit 74 to the vertically adjacent pixel averaging unit 82. For example, in the event that the pixels a through p in Fig. 9 represent the pixels of the current block, the pixel values I through J of pixels adjacent to the left of the current block are input to the vertically adjacent pixel averaging unit 82.

The vertically adjacent pixel averaging unit 82 uses the pixels I through J to calculate a vertical pixel average value AveV, and supplies the calculated vertical pixel average value AveV to the vertically adjacent pixel distribution calculating unit 84. The vertically adjacent pixel distribution calculating unit 84 uses the vertical pixel average value AveV to calculate a vertical pixel distribution value DistV, and supplies the calculated vertical pixel distribution value DistV to the prediction mode application determining unit 85. In response to this, the prediction mode application determining unit 85 receives the vertical pixel distribution value DistV from the vertically adjacent pixel distribution calculating unit 84.

In step S43, the prediction mode application determining unit 85 determines whether or not the horizontal pixel distribution value DistH received from the horizontally adjacent pixel distribution calculating unit 83 is smaller than a predetermined threshold ThH in the horizontal direction. Specifically, the prediction mode application determining unit 85 determines whether or not the following Expression (65) is satisfied.

$$DistH < ThH \quad . \ . \ . \quad (65)$$

In the event that determination is made in step S43 that the horizontal pixel distribution value DistH is smaller than the threshold ThH in the horizontal direction, the processing proceeds to step S44. In step S44, the prediction mode application determining unit 85 further determines whether or not the vertical pixel distribution value DistV received from the vertically adjacent pixel distribution calculating unit 84 is smaller than a predetermined threshold ThV in the vertical direction. Specifically, the prediction mode application determining unit 85 determines whether or not the following Expression (66) is satisfied.

$$DistV < ThV \quad . \quad . \quad . \quad (66)$$

In the event that determination is made in step S44 that the vertical pixel distribution value DistV is greater than the threshold ThV in the vertical direction, the processing proceeds to step S45. In this case, the distribution value of the pixel values I through J in Fig. 9 is great, but the distribution value of the pixel values A through D in Fig. 9 is small. Specifically, it can be conceived that the pixel values of the pixels a through p included in the current block are high in correlation with the pixels values in the horizontal direction, and the mode 1 (Horizontal Prediction) in Fig. 6 and Fig. 7 are readily chosen. Accordingly, in step S45 the prediction mode application determining unit 85 applies the mode 1 (Horizontal Prediction) to the current block.

In the event that determination is made in step S44 that the vertical pixel distribution value DistV is smaller than the threshold ThV in the vertical direction, the processing proceeds to step S46. In this case, it cannot be determined which is high in correlation of the pixel values in the horizontal direction and vertical direction. Accordingly, in step S46 the prediction mode application determining unit 85 applies the normal prediction mode to the current block.

In the event that the normal prediction mode has been applied by the prediction mode application determining unit 85, motion prediction and compensation is performed in the nine kinds of the prediction modes that are the intra 4 × 4 prediction modes at the intra prediction unit 74, and the optimal intra prediction mode is selected out thereof.

On the other hand, In the event that determination is made in step S43 that the horizontal pixel distribution value DistH is greater than the threshold ThH in the horizontal direction, the processing proceeds to step S47. In step S47, the prediction mode application determining unit 85 further determines whether or not the vertical pixel distribution value DistV is smaller than the predetermined threshold ThV in the vertical direction.

In the event that determination is made in step S44 that the vertical pixel distribution value DistV is greater than the threshold ThV in the vertical direction, the processing proceeds to step S46. In this case, it cannot be determined which is high in correlation of the pixel values in the horizontal direction and vertical direction. Accordingly, in step S46 the prediction mode application determining unit 85 applies the normal prediction mode to the current block.

In the event that determination is made in step S47 that the vertical pixel distribution value DistV is smaller than the threshold ThV in the vertical direction, the processing proceeds to step S48.

In this case, the distribution value of the pixel values I through J in Fig. 9 is small, but the distribution value of the pixel values A through D in Fig. 9 is great. Specifically, it can be conceived that the pixel values of the pixels a through p included in the current block are high in correlation with the pixels values in the vertical direction, and the mode 0 (Vertical Prediction) in Fig. 6 and Fig. 7 are readily chosen. Accordingly, in step S48 the prediction mode application determining unit 85 applies the mode 0 (Vertical Prediction) to the current block.

Application mode information indicating a mode applied to the current block in steps S45, S46, and S48 is supplied to the intra prediction unit 74.

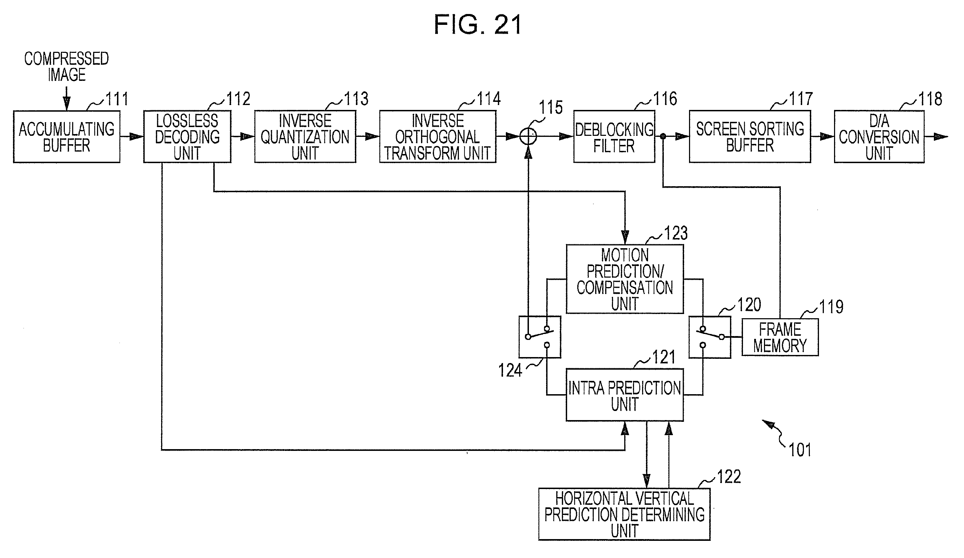

As described above, in the event of the intra 4 × 4 prediction modes, application of the mode 0 or mode 1 to the current block is arranged to be determined from adjacent pixels of the current block prior to intra prediction. The adjacent pixels of the current block are a part of a decoded image to be encoded prior to the current block, and accordingly, this determination processing can similarly be executed at the image decoding device 101 in Fig. 21.

Accordingly, in the event that the mode 0 or mode 1 has been applied to the current block by the intra horizontal vertical prediction determination processing in Fig. 17, there is no need to append the prediction mode information indicating the kind of the intra 4 × 4 prediction modes to the encoded information (compressed image) for the decoding side.

Specifically, in the event of the intra 4 × 4 prediction modes, the prediction mode information (mode bit) indicating the mode 0 or mode 1, which is necessary for each current block, can be reduced from the encoded information.

Note that, as described above, the mode 0 and mode 1 are the most frequently used modes out of the nine kinds of the prediction modes. According to this, further great improvement in encoding efficiency can be realized as compared to the invention described in NPL 2.

Example of Threshold

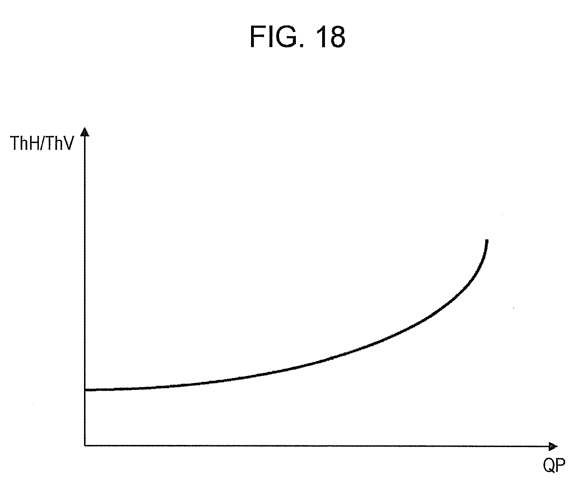

Fig. 18 is a diagram showing an example of the thresholds. With the example in Fig. 18, a graph is illustrated wherein the vertical axis represents the threshold ThH in the horizontal direction and the threshold ThV in the horizontal direction, and the horizontal axis represents a quantization parameter QP.

The threshold ThH in the horizontal direction to be compared with the horizontal pixel distribution value DistH, and the threshold ThV in the horizontal direction to be compared with the vertical pixel distribution value DistV are, as shown in the graph in Fig. 18, defined as a function of the quantization parameter QP within the compressed image.

That is to say, the greater the QP is, the more the values of the threshold ThH in the horizontal direction and the threshold ThV in the horizontal direction can be increased, and accordingly, the overhead of information amount at the time of a lower bit rate can be reduced, and encoding efficiency can be improved.

Description of Intra prediction Processing

Next, the intra prediction processing in step S32 in Fig. 4 will be described with reference to the flowchart in Fig. 19. Note that, with the example in Fig. 19, description will be made regarding a case of a luminance signal as an example.

In step S51, the intra prediction unit 74 performs intra prediction as to the intra prediction modes of 4 × 4 pixels, 8 × 8 pixels, and 16 × 16 pixels.

As described above, with the intra 4 × 4 prediction modes and the intra 8 × 8 prediction modes, there are the nine kinds of prediction modes, and one prediction mode can be defined for each block. With the intra 16 × 16 prediction modes and the intra prediction modes for color difference signals, there are the four kinds of prediction modes, and one prediction mode can be defined as to one macro block.

The intra prediction unit 74 performs intra prediction as to the pixels in the block to be processed in all kinds of prediction modes of the intra prediction modes with reference to the decoded image read out from the frame memory 72 and supplied via the switch 73. According to this, prediction images in all kinds of prediction modes of the intra prediction modes are generated. Note that pixels not subjected to deblocking filtering by the deblocking filter 71 are used as the decoded pixels to be referenced.

In step S52, the intra prediction unit 74 calculates a cost function value as to the intra prediction modes of 4 × 4 pixels, 8 × 8 pixels, and 16 × 16 pixels. Here, calculation of a cost function value is performed based on one of the techniques of a High Complexity mode or Low Complexity mode. These modes are determined in JM (Joint Model) that is reference software in the H.2-64/AVC system.

Specifically, in the High Complexity mode, tentatively, up to encoding processing is performed as to all of the prediction modes serving as candidates as the processing in step S41. A cost function value represented with the following Expression (67) is calculated as to the prediction modes, and a prediction mode that provides the minimum value thereof is selected as the optimal prediction mode.

$$Cost(Mode) = D + \lambda \cdot R \qquad . . . (67)$$

D denotes difference (distortion) between the raw image and a decoded image, R denotes a generated code amount including an orthogonal transform coefficient, and $\lambda$ denotes a LaGrange multiplier to be provided as a function of a quantization parameter QP.

On the other hand, in the Low Complexity mode, a prediction image is generated, and up to header bits of motion vector information, prediction mode information, flag information, and so forth are calculated as to all of the prediction modes serving as candidates as the processing in step S41. A cost function value represented with the following Expression (68) is calculated as to the prediction modes, and a prediction mode that provides the minimum value thereof is selected as the optimal prediction mode.

$$Cost(Mode) = D + QPtoQuant(QP) + Header\_Bit . . . (68)$$

D denotes difference (distortion) between the raw image and a decoded image, Header_Bit denotes header bits as to a prediction mode, and QPtoQuant is a function to be provided as a function of the quantization parameter QP.

In the Low Complexity mode, a prediction image is only generated as to all of the prediction modes, and there is no need to perform encoding processing and decoding processing, and accordingly, a calculation amount can be reduced.

In step S53, the intra prediction unit 74 determines the optimal mode as to the intra prediction modes of 4 × 4 pixels, 8 × 8 pixels, and 16 × 16 pixels. Specifically, as described above, in the event of the intra 4 × 4 prediction mode and intra 8 × 8 prediction mode, the number of prediction mode types is nine, and in the event of the intra 16 × 16 prediction mode, the number of prediction mode types is four. Accordingly, the intra prediction unit 74 determines, based on the cost function values calculated in step S42, the optimal intra $4 \times 4$ prediction mode, optimal intra $8 \times 8$ prediction mode, and optimal intra $16 \times 16$ prediction mode out thereof.

Note that, in the event of the $4 \times 4$-pixel intra prediction mode, the application mode information from the horizontal vertical prediction determining unit 75 is supplied to the intra prediction unit 74. Accordingly, in step S51, in the event of the $4 \times 4$-pixel intra prediction mode, intra prediction in the prediction mode according to the comparison result by the prediction mode application determining unit 85 is performed.

Specifically, in the event that the normal prediction mode has been applied to the current block by the prediction mode application determining unit 85, the above-mentioned processing in steps S51, S52, and S53 is performed.

On the other hand, in the event that the mode 0 or mode 1 has been applied to the current block by the prediction mode application determining unit 85, with regard to the $4 \times 4$-pixel intra prediction mode, in step S51 intra prediction in the mode 0 or mode 1 is performed. Also, in step S52, a cost function value as to the intra prediction in the mode 0 or mode 1 is calculated, and in step S53, the mode 0 or mode 1 is determined to be the optimal mode in the $4 \times 4$-pixel intra prediction mode.

In step S54, the intra prediction unit 74 selects the optimal intra prediction mode out of the optimal modes determined as to the intra prediction modes of $4 \times 4$ pixels, $8 \times 8$ pixels, and $16 \times 16$ pixels based on the cost function values calculated in step S52. In other words, the intra prediction unit 74 selects a mode of which the cost function value is the minimum value out of the optimal modes determined as to $4 \times 4$ pixels, $8 \times 8$ pixels, and $16 \times 16$ pixels, as the optimal intra prediction mode. The intra prediction unit 74 then supplies the prediction image generated in the optimal intra prediction mode, and the cost function value thereof to the prediction image selecting unit 77.

Description of Inter Motion Prediction Processing of Image Encoding Device

Next, the inter motion prediction processing in step S33 in Fig. 4 will be described with reference to the flowchart in Fig. 20.

In step S61, the motion prediction/compensation unit 76 determines a motion vector and a reference image as to each of the eight kinds of the inter prediction modes made up of $16 \times 16$ pixels through $4 \times 4$ pixels. That is to say, a motion vector and a reference image are each determined as to the block to be processed in each of the inter prediction modes.

In step S62, the motion prediction/compensation unit 76 subjects the reference image to motion prediction and compensation processing based on the motion vector determined in step S61 regarding each of the eight kinds of the inter prediction modes made up of $16 \times 16$ pixels through $4 \times 4$ pixels. According to this motion prediction and compensation processing, a prediction image in each of the inter prediction modes is generated.

In step S63, the motion prediction/compensation unit 76 generates motion vector information to be added to the compressed image regarding the motion vector determined as to each of the eight kinds of inter prediction modes made up of $16 \times 16$ pixels through $4 \times 4$ pixels.

The generated motion vector information is also used at the time of calculation of a cost function value in the next step S64, and output, in the event that the corresponding prediction image has ultimately been selected by the prediction image selecting unit 77, to the lossless encoding unit 66 along with the prediction mode information and reference frame information.

In step S64, the motion prediction/compensation unit 76 calculates the cost function value shown in the above-mentioned Expression (67) or Expression (68) as to each of the eight kinds of the inter prediction modes made up of $16 \times 16$ pixels through $4 \times 4$ pixels. The cost function values calculated here are used at the time of determining the optimal inter prediction mode in step S34 in Fig. 4 described above.

The encoded compressed image is transmitted via a predetermined transmission path, and decoded by the image decoding device.

Configuration Example of Image Decoding Device

Fig. 14 represents the configuration of an embodiment of an image decoding device serving as the image processing device to which the present invention has been applied.

An image decoding device 101 is configured of an accumulating buffer 111, a lossless decoding unit 112, an inverse quantization unit 113, an inverse orthogonal transform unit 114, a computing unit 115, a deblocking filter 116, a screen sorting buffer 117, a D/A conversion unit 118, frame memory 119, a switch 120, an intra prediction unit 121, a horizontal vertical prediction determining unit 122, a motion prediction/compensation unit 123, and a switch 124.

The accumulating buffer 111 accumulates a transmitted compressed image. The lossless decoding unit 112 decodes information supplied from the accumulating buffer 111 and encoded by the lossless encoding unit 66 in Fig. 1 using a system corresponding to the encoding system of the lossless encoding unit 66. The inverse quantization unit 113 subjects the image decoded by the lossless decoding unit 112 to inverse quantization using a system corresponding to the quantization system of the quantization unit 65 in Fig. 1. The inverse orthogonal transform unit 114 subjects the output of the inverse quantization unit 113 to inverse orthogonal transform using a system corresponding to the orthogonal transform system of the orthogonal transform unit 64 in Fig. 1.

The output subjected to inverse orthogonal transform is decoded by being added with the prediction image supplied from the switch 124 by the computing unit 115. The deblocking filter 116 removes the block distortion of the decoded image, then supplies to the frame memory 119 for accumulation, and also outputs to the screen sorting buffer 117.

The screen sorting buffer 117 performs sorting of images. Specifically, the sequence of frames sorted for encoding sequence by the screen sorting buffer 62 in Fig. 1 is resorted in the original display sequence. The D/A conversion unit 118 converts the image supplied from the screen sorting buffer 117 from digital to analog, and outputs to an unshown display for display.

The switch 120 reads out an image to be subjected to inter processing and an image to be referenced from the frame memory 119, outputs to the motion

prediction/compensation unit 123, and also reads out an image to be used for intra prediction from the frame memory 119, and supplies to the intra prediction unit 121.

Information indicating the intra prediction mode obtained by decoding the header information is supplied from the lossless decoding unit 112 to the intra prediction unit 121. The intra prediction unit 121 generates, based on this information, a prediction image, and outputs the generated prediction image to the switch 124.

At this time, with regard to the intra $4 \times 4$ prediction modes, the intra prediction processing of the prediction mode according to the application mode information from the horizontal vertical prediction determining unit 122 is performed.

Specifically, in the event that the mode 0 or mode 1 has been applied to the current block by the horizontal vertical prediction determining unit 122, the intra prediction unit 121 performs intra prediction processing according to the applied mode 0 or mode 1 regarding the intra $4 \times 4$ prediction modes to generate a prediction image. In the event that neither the mode 0 nor mode 1 has been applied to the current block by the horizontal vertical prediction determining unit 122, the intra prediction unit 121 performs intra prediction processing based on the intra prediction mode of the lossless decoding unit 112 to generate a prediction image. That is to say, in the event that the mode 0 nor mode 1 has been applied to the current block, the same processing as with the cases of other intra prediction modes is also performed regarding the intra $4 \times 4$ prediction modes.

Note that, in order to perform these processes, the intra prediction unit 121 supplies the information (pixel value) of an adjacent pixel of the current block for intra prediction to the horizontal vertical prediction determining unit 122, and receives the application mode information from the horizontal vertical prediction determining unit 122.

The horizontal vertical prediction determining unit 122 basically performs the same processing as with the horizontal vertical prediction determining unit 75 in Fig. 1. Specifically, the horizontal vertical prediction determining unit 122 calculates an average value of the pixel values of the upper adjacent pixels of the current block for intra prediction, and an average value of the pixel values of the left adjacent pixels, and uses these to further calculate the distribution value of the pixel values of the upper adjacent pixels, and the distribution value of the pixel values of the left adjacent pixels.

The horizontal vertical prediction determining unit 122 applies an intra prediction mode according to the comparison result between the calculated distribution value of the upper adjacent pixels and a predetermined threshold in the horizontal direction, and the comparison result between the calculated distribution value of the left adjacent pixels and a predetermined threshold in the vertical direction to the current block. The information of the application mode indicating the mode applied to the current block is supplied to the intra prediction unit 121.

Note that the horizontal vertical prediction determining unit 122 is configured in the same way as the horizontal vertical prediction determining unit 75 in Fig. 1. Accordingly, in the event of performing description of the horizontal vertical prediction determining unit 122 as well, description will be made using the function blocks of the horizontal vertical prediction determining unit 122 shown in Fig. 2. Specifically, the horizontal vertical prediction determining unit 122 is also configured of a horizontally adjacent pixel averaging unit 81, a vertically adjacent pixel averaging unit 82, a horizontally adjacent pixel distribution calculating unit 83, a vertically adjacent pixel distribution calculating unit 84, and a prediction mode application determining unit 85.

The information obtained by decoding the header information (prediction mode information, motion vector information, and reference frame information) is supplied from the lossless decoding unit 112 to the motion prediction/ compensation unit 123. In the event of the information indicating the inter prediction mode having been supplied, the motion prediction/compensation unit 123 subjects the imager to motion prediction and compensation processing based on the motion vector information and reference frame information to generate a prediction image. The motion prediction/ compensation unit 123 outputs the prediction image generated by the inter prediction mode to the switch 124.

The switch 124 selects the prediction image generated by the motion prediction/compensation unit 123 or intra prediction unit 121, and supplies to the computing unit 115.

Description of Decoding Processing of Image Decoding Device

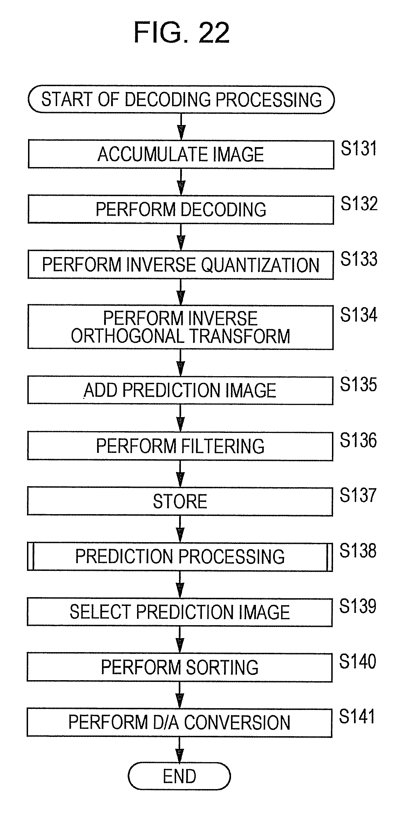

Next, the decoding processing that the image decoding device 101 executes will be described with reference to the flowchart in Fig. 22.

In step S131, the accumulating buffer 111 accumulates the transmitted image. In step S132, the lossless decoding unit 112 decodes the compressed image supplied from the accumulating buffer 111. Specifically, the I picture, P picture, and B picture encoded by the lossless encoding unit 66 in Fig. 1 are decoded.

At this time, the motion vector information, reference frame information, prediction mode information (information indicating the intra prediction mode or inter prediction mode), and precision flags are also decoded.

Specifically, in the event that the prediction mode information is intra prediction mode information, the prediction mode information is supplied to the intra prediction unit 121. In the event that the prediction mode information is inter prediction mode information, the motion vector information corresponding to the prediction mode information is supplied to the motion

prediction/compensation unit 123.

Here, in the event of the intra $4 \times 4$ prediction mode of the mode 0 or mode 1 applied by the horizontal vertical prediction determining unit 75 of the image encoding device 51, the information indicating the kind of the prediction mode is not transmitted. Note that there may be a case where the mode 0 or mode 1 is taken as the optimal intra prediction mode by the processing in the normal intra prediction mode, and in this case, even with the intra $4 \times 4$ prediction mode of the mode 0 or mode 1, the information indicating the kind of the prediction mode is transmitted.

In step S133, the inverse quantization unit 113 inversely quantizes the transform coefficient decoded by the lossless decoding unit 112 using a property corresponding to the property of the quantization unit 65 in Fig. 1. In step S134, the inverse orthogonal transform unit 114 subjects the transform coefficient inversely quantized by the inverse quantization unit 113 to inverse orthogonal transform using a property corresponding to the property of the orthogonal transform unit 64 in Fig. 1. This means that difference information corresponding to the input of the orthogonal transform unit 64 in Fig. 1 (the output of the computing unit 63) has been decoded.

In step S135, the computing unit 115 adds the prediction image selected in the processing in later-described step S141 and input via the switch 124, to the difference information. Thus, the original image is decoded. In step S136, the deblocking filter 116 subjects the image output from the computing unit 115 to filtering. Thus, block distortion is removed. In step S137, the frame memory 119 stores the image subjected to filtering.

In step S138, the intra prediction unit 121 and motion prediction/compensation unit 123 perform the corresponding image prediction processing in response to the prediction mode information supplied from the lossless decoding unit 112.

Specifically, in the event that the intra prediction mode information has been supplied from the lossless decoding unit 112, the intra prediction unit 121 performs the intra prediction processing in the intra prediction mode. At this time, with regard to the intra $4 \times 4$ prediction modes, the intra prediction unit 121 performs intra prediction processing in the intra prediction mode according to the application mode information from the horizontal vertical prediction determining unit 122. Also, in the event that the inter prediction mode information have been supplied from the lossless decoding unit 112, the motion prediction/compensation unit 123 performs the motion prediction and compensation processing in the inter prediction mode.

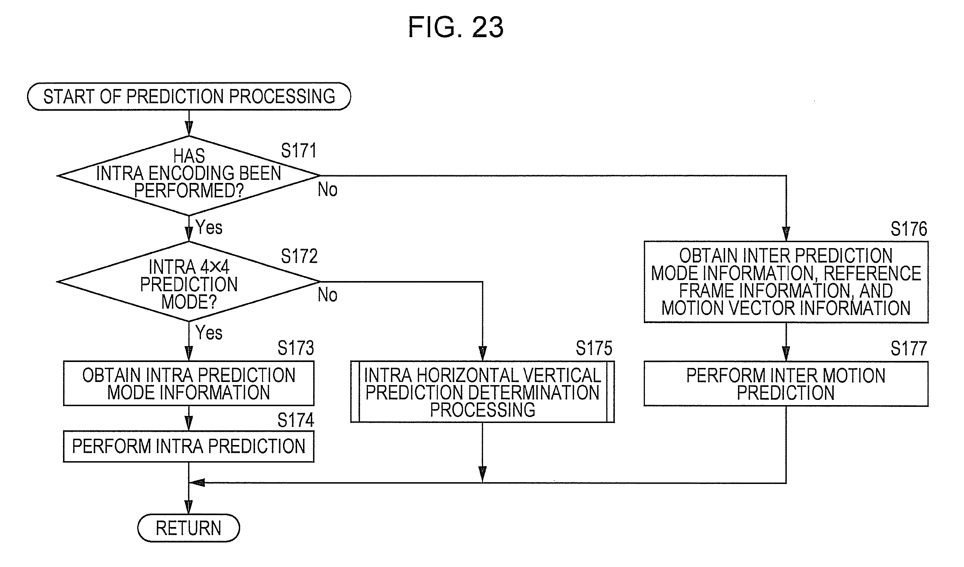

The details of the prediction processing in step S138 will be described later with reference to Fig. 23, but according to this processing, the prediction image generated by the intra prediction unit 121 or the prediction image generated by the motion prediction/compensation unit 123 is supplied to the switch 124.

In step S139, the switch 124 selects the prediction image. Specifically, the prediction image generated by the intra prediction unit 121 or the prediction image generate by the motion prediction/compensation unit 123 is supplied. Accordingly, the supplied prediction image is selected, supplied to the computing unit 115, and in step S134, as described above, added to the output of the inverse orthogonal transform unit 114.

In step S140, the screen sorting buffer 117 performs sorting. Specifically, the sequence of frames sorted for encoding by the screen sorting buffer 62 of the image encoding device 51 is sorted in the original display sequence.

In step S141, the D/A conversion unit 118 converts the image from the screen sorting buffer 117 from digital to analog. This image is output to an unshown display, and the image is displayed.

Description of Prediction Processing

Next, the prediction processing in step S138 in Fig. 22 will be described with reference to the flowchart in Fig. 23.

In step S171, the intra prediction unit 121 determines whether or not the current block has been subjected to intra encoding. Upon the intra prediction mode information being supplied from the lossless decoding unit 112 to the intra prediction unit 121, in step S171 the intra prediction unit 121 determines that the current block has been subjected to intra encoding, and the processing proceeds to step S172.

In step S172, the intra prediction unit 121 determines whether or not the prediction mode is the intra 4 × 4 prediction mode. In the event that determination is made in step S172 that the prediction mode is the intra 4 × 4 prediction mode, i.e., in the event that the prediction mode is the intra 8 × 8 or 16 × 16 prediction mode, the processing proceeds to step S173.

In step S173, the intra prediction unit 121 obtains the intra prediction mode information, and in step S174 performs intra prediction.

Specifically, in the event that the image to be processed is an image to be subjected to intra processing, the necessary image is read out from the frame memory 119, and supplied to the intra prediction unit 121 via the switch 120. In step S174, the intra prediction unit 121 performs intra prediction in accordance with the intra prediction mode information obtained in step S173 to generate a prediction image. The generated prediction image is output to the switch 124.

In the event that determination is made in step S172 that the prediction mode is the intra 4 × 4 prediction mode, the processing proceeds to step S175.

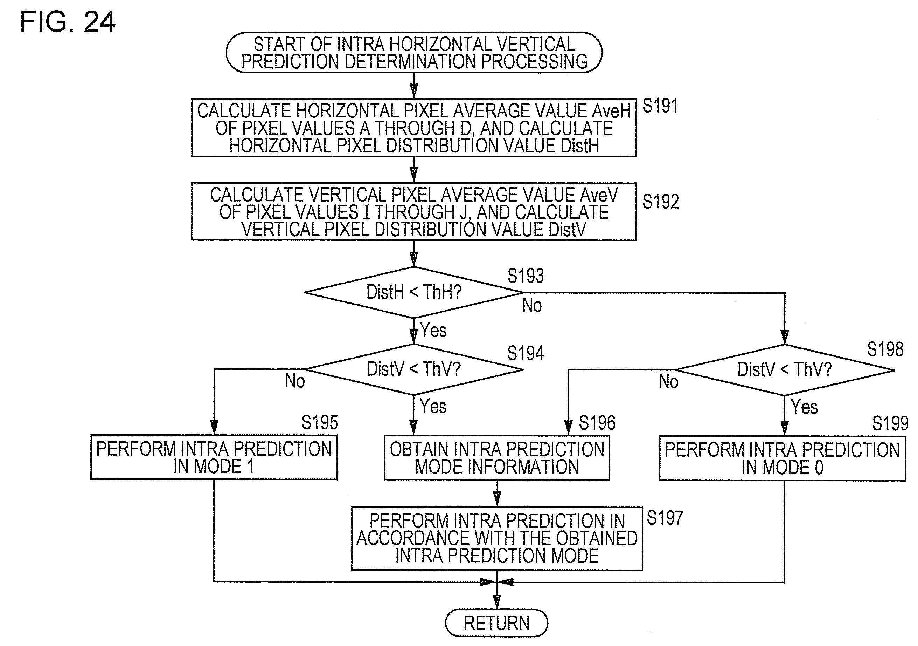

In step S175, the intra prediction unit 121 and horizontal vertical prediction determining unit 122 perform intra horizontal vertical prediction determination processing. The details of the intra horizontal vertical prediction determination processing in step S175 will be described later with reference to Fig. 24, but according to this processing, the mode 0 or mode 1 is applied to the current block regarding the intra 4 × 4 prediction mode as the prediction mode. In the event that neither the mode 0 nor mode 1 has been applied, the normal prediction mode is applied to the current block. The application mode information regarding this prediction mode is supplied to the intra prediction unit 122, the intra prediction in the applied prediction mode is performed, and a prediction image is generated. The generated prediction image is then output to the switch 124.

On the other hand, in the event that determination is made in step S171 that intra encoding has not been performed, the processing proceeds to step S176.

In the event that the image to be processed is an image to be subjected to inter processing, the inter prediction mode information, reference frame information, and motion vector information are supplied from the lossless decoding unit 112 to the motion prediction/compensation unit 123. In step S176, the motion prediction/compensation unit 123 obtains the inter prediction mode information, reference frame information, motion vector information, and so forth.

Subsequently, in step S177 the motion prediction/compensation unit 123 performs inter motion prediction. Specifically, in the event that the image to be processed is an image to be subjected to inter prediction processing, the necessary image is read out from the frame memory 119, and supplied to the motion prediction/compensation unit 123 via the switch 120. In step S177, the motion prediction/compensation unit 123 performs the motion prediction in the inter prediction mode based on the motion vector obtained in step S176 to generate a prediction image. The generated prediction image is output to the switch 124.

Description of Intra Horizontal Vertical Prediction Determination Processing

Fig. 24 is a flowchart for describing the intra horizontal vertical prediction determination processing in step S175 in Fig. 23. Note that the processing in steps S191 through S194 and S198 are basically the same processing as the processing in steps S41 through S44 and S47, description thereof is redundant, and accordingly, detailed description thereof will be omitted. Also, with the example in Fig. 24 as well, in order to make description understandable, description will be made with reference to the above-mentioned Fig. 9 as appropriate.

In step S191, the horizontally adjacent pixel averaging unit 81 calculates a horizontal pixel average value AveH of the pixel values A through D in Fig. 9, and the horizontally adjacent pixel distribution calculating unit 83 uses the horizontal pixel average value AveH to calculate a horizontal pixel distribution value DistH. The horizontally adjacent pixel distribution calculating unit 83 supplies the calculated horizontal pixel distribution value DistH to the prediction mode application determining unit 85. In response to this, the prediction mode application determining unit 85 receives the horizontal pixel distribution value DistH from the horizontally adjacent pixel distribution calculating unit 83.

In step S192, the vertically adjacent pixel averaging unit 82 calculates a vertical pixel average value AveV using the pixel values I through J in Fig. 9, and the vertically adjacent pixel distribution calculating unit 84 uses the vertical pixel average value AveV to calculate a vertical pixel distribution value DistV. The vertically adjacent pixel distribution calculating unit 84 supplies the calculated vertical pixel distribution value DistV to the prediction mode application determining unit 85. In response to this, the prediction mode application determining unit 85 receives the vertical pixel distribution value DistV from the vertically adjacent pixel distribution calculating unit 84.

In step S193, the prediction mode application determining unit 85 determines whether or not the horizontal pixel distribution value DistH received from the horizontally adjacent pixel distribution calculating unit 83 is smaller than a predetermined threshold ThH in the horizontal direction. That is to say, the prediction mode application determining unit 85 determines whether or not the above-mentioned Expression (65) is satisfied.

In the event that determination is made in step S193 that the horizontal pixel distribution value DiatH is smaller than the threshold ThH in the horizontal direction, the processing proceeds to step S194. In step S194, the prediction mode application determining unit 85 further determines whether or not the vertical pixel distribution value DistV received from the vertically adjacent pixel distribution calculating unit 84 is smaller than a predetermined threshold ThV in the vertical direction. That is to say, the prediction mode application determining unit 85 determines whether or not the above-mentioned Expression (66) is satisfied.

In the event that determination is made in step S194 that the vertical pixel distribution value DistV is smaller than the threshold ThV in the vertical direction, the processing proceeds to step S195. In step S195, the prediction mode application determining unit 85 applies the mode 1 (Horizontal Prediction) to the current block, and the intra prediction unit 121 performs intra prediction in the applied mode 1.

Specifically, it can be conceived that the pixel values of the pixels a through p included in the current block in Fig. 9 are high in correlation with the pixels values in the horizontal direction, and the mode 1 (Horizontal Prediction) in Fig. 6 and Fig. 7 are readily chosen. Accordingly, the prediction mode application determining unit 122 applies the mode 1 (Horizontal Prediction) to the current block. The information of the application mode indicating the mode 1 applied to the current block is supplied to the intra prediction unit 121. The intra prediction unit 121 performs the intra prediction in the mode 1 based on the information of the application mode to generate a prediction image. The generated prediction image is output to the switch 124.

In the event that determination is made in step S194 that the vertical pixel distribution value DistV is smaller than the threshold ThV in the vertical direction, the processing proceeds to step S196. In this case, it cannot be determined which is high in correlation of the pixel values in the horizontal direction and vertical direction. Accordingly, in step S196 the prediction mode application determining unit 122 applies the normal prediction mode to the current block, and the intra prediction unit 121 obtains the intra prediction mode information.

That is to say, the information of the application mode indicating the normal prediction mode applied to the current block is supplied to the intra prediction unit 121. The intra prediction unit 121 obtains the intra prediction mode information to perform the normal intra prediction based on the information of the application mode.

Subsequently, in step S197 the intra prediction unit 121 performs intra prediction in accordance with the intra prediction mode information obtained in step S196 to generate a prediction image. The generated prediction image is output to the switch 124.

On the other hand, in the event that determination is made in step S193 that the horizontal pixel distribution value DistH is greater than the threshold ThH in the horizontal direction, the processing proceeds to step S198. In step S198, the prediction mode application determining unit 85 further determines whether or not the vertical pixel distribution value DistV is smaller than a predetermined threshold ThV in the vertical direction.

In the event that determination is made in step S198 that the vertical pixel distribution value DistV is greater than the threshold ThV in the vertical direction, the processing proceeds to step S196. In this case, it cannot be determined which is high in correlation of the pixel values in the horizontal direction and vertical direction. Accordingly, in step S196 the prediction mode application determining unit 85 applies the normal prediction mode to the current block, and the intra prediction unit 121 obtains the intra prediction mode information.

Subsequently, in step S197 the intra prediction unit 121 performs intra prediction in accordance with the intra prediction mode information obtained in step S196 to generate a prediction image. The generated prediction image is output to the switch 124.

In the event that determination is made in step S198 that the vertical pixel distribution value DistV is smaller than the threshold ThV in the vertical direction, the processing proceeds to step S199. In step S199, the prediction mode application determining unit 122 applies the mode 0 (Vertical Prediction) to the current block, and the intra prediction unit 121 performs intra prediction in the applied mode 1.

Specifically, it can be conceived that the pixel values of the pixels a through p included in the current block in Fig. 9 are high in correlation with the pixels values in the vertical direction, and the mode 0 (Vertical Prediction) in Fig. 6 and Fig. 7 are readily chosen. Accordingly, the prediction mode application determining unit 122 applies the mode 0 (Vertical Prediction) to the current block. The information of the application mode indicating the mode 0 applied to the current block is supplied to the intra prediction unit 121. The intra prediction unit 121 performs the intra prediction in the mode 0 based on the information of the application mode to generate a prediction image. The generated prediction image is output to the switch 124.

As described above, with both of the image encoding device 51 and the image decoding device 101, in the event of the intra 4 x 4 prediction modes, the application of the mode 0 or mode 1 as to the current block is arranged to be determined from the adjacent pixels of the current block.

Thus, in the event that the mode 0 or mode 1 has been applied to the current block by the intra horizontal vertical prediction determination processing, there is no need to add the prediction mode information indicating the kind of the intra 4 x 4 prediction modes to the compressed image for the decoding side.

That is to say, in the in the event of the intra 4 x 4 prediction modes, the prediction mode information (mode bit) indicating the mode 0 or mode 1, which is necessary for each current block, can be reduced from the compressed image.

Further, the mode 0 and mode 1 are the frequently used modes out of the nine kinds of the prediction modes, and accordingly, further great improvement and progress in encoding efficiency can be realized as compared to the invention described in NPL 2.

Note that description has been made so far regarding a case where the application of the mode 0 or mode 1 is determined using an adjacent pixel value of the current block in the event of the intra 4 x 4 prediction mode for luminance signals, but the present invention may be applied the cases of the intra 8 x 8 and intra 16 x 16 prediction modes. Also, the present invention may be applied to the case of the intra prediction mode for color difference signals.

Also, description has been made so far regarding the case where the size of a macro block is 16 x 16 pixels, but the present invention may be applied to an extended macro block size described in "Video Coding Using Extended Block Sizes", VCEG-AD09, ITU-Telecommunications Standardization Sector STUDY GROUP Question 16 - Contribution 123, Jan 2009.

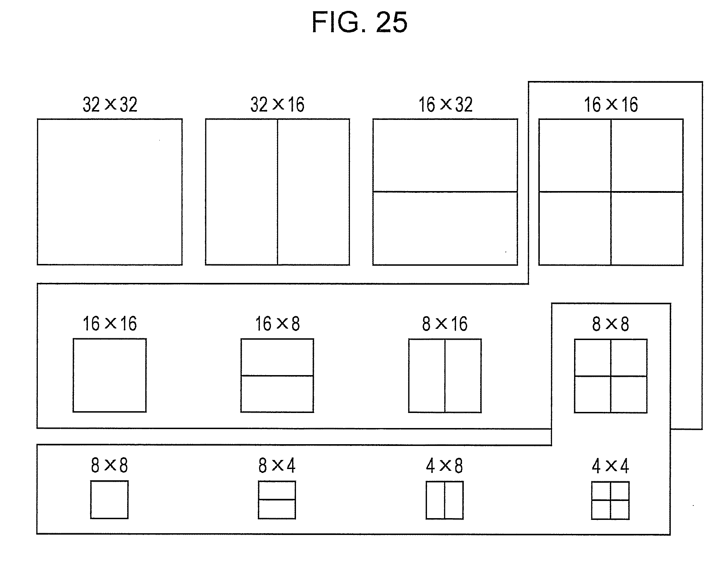

Fig. 25 is a diagram illustrating an example of an extended macro block size. With the above-mentioned proposal, the macro block size is extended up to 32 x 32 pixels.

Macro blocks made up of 32 x 32 pixels divided into blocks (partitions) of 32 x 32 pixels, 32 x 16 pixels, 16 x 32 pixels, and 16 x 16 pixels are shown from the left in order on the upper tier in Fig. 25. Blocks made up of 16 x 16 pixels divided into blocks of 16 x 16 pixels, 16 x 8 pixels, 8 x 16 pixels, and 8 x 8 pixels are shown from the left in order on the middle tier in Fig. 25. Also, blocks made up of 8 x 8 pixels divided into blocks of 8 x 8 pixels, 8 x 4 pixels, 4 x 8 pixels, and 4 x 4 pixels are shown from the left in order on the lower tier in Fig. 25.

In other words, the macro blocks of 32 x 32 pixels may be processed with blocks of 32 x 32 pixels, 32 x 16 pixels, 16 x 32 pixels, and 16 x 16 pixels shown on the upper tier in Fig. 25.

Also, the blocks of 16 x 16 pixels shown on the right side on the upper tier may be processed with blocks of 16 x 16 pixels, 16 x 8 pixels, 8 x 16 pixels, and 8 x 8 pixels shown on the middle tier in the same way as with the H. 264/AVC system.

Further, the blocks of 8 x 8 pixels shown on the right side on the middle tier may be processed with blocks of 8 x 8 pixels, 8 x 4 pixels, 4 x 8 pixels, and 4 x 4 pixels shown on the lower tier in the same way as with the H.264/AVC system.

With the extended macro block sizes, by employing such a hierarchical structure, regarding a 16 x 16-pixel block or less, a greater block is defined as a superset thereof while maintaining compatibility with the H.264/AVC system.

The present invention may also be applied to the proposed macro block sizes extended as described above.

Description has been made so far with the H.264/AVC system employed as a coding system, but the present invention is not restricted to this, and another coding system/decoding system for performing intra prediction using adjacent pixels may be employed.

Note that the present invention may be applied to an image encoding device and an image decoding device used at the time of receiving image information (bit streams) compressed by orthogonal transform such as discrete cosine transform or the like and motion compensation via a network medium such as satellite broadcasting, a cable television, the Internet, a cellular phone, or the like, for example, as with MPEG, H.26x, or the like. Also, the present invention may be applied to an image encoding device and an image decoding device used at the time of processing image information on storage media such as an optical disc, a magnetic disk, and flash memory. Further, the present invention may be applied to a motion prediction compensation device included in such an image encoding device and an image decoding device.

The above-mentioned series of processing may be executed by hardware, or may be executed by software. In the event of executing the series of processing by software, a program making up the software thereof is installed in a computer. Here, examples of the computer include a computer built into dedicated hardware, and a general-purpose personal computer whereby various functions can be executed by installing various programs therein.

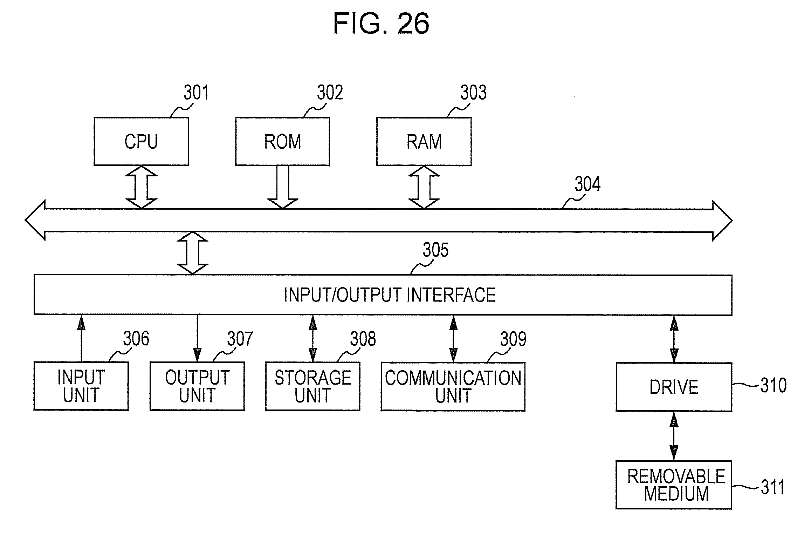

Fig. 26 is a block diagram illustrating a configuration example of the hardware of a computer which executes the above-mentioned series of processing using a program.

With the computer, a CPU (Central Processing Unit) 301, ROM (Read Only Memory) 302, and RAM (Random Access Memory) 303 are mutually connected by a bus 304.

Further, an input/output interface 305 is connected to the bus 304. An input unit 306, an output unit 307, a storage unit 308, a communication unit 309, and a drive 310 are connected to the input/output interface 305.

The input unit 306 is made up of a keyboard, a mouse, a microphone, and so forth. The output unit 307 is made up of a display, a speaker, and so forth. The communication unit 308 is made up of a hard disk, nonvolatile memory, and so forth. The communication unit 309 is made up of a network interface and so forth. The drive 310 drives a removable medium 311 such as a magnetic disk, an optical disc, a magneto-optical disk, semiconductor memory, or the like.

With the computer thus configured, for example, the CPU 301 loads a program stored in the storage unit 308 to the RAM 303 via the input/output interface 305 and bus 304, and executes the program, and accordingly, the above-mentioned series of processing is performed.

The program that the computer (CPU 301) executes may be provided by being recorded in the removable medium 311 serving as a package medium or the like. Also, the program may be provided via a cable or wireless transmission medium such as a local area network, the Internet, or digital broadcasting.

With the computer, the program may be installed in the storage unit 308 via the input/output interface 305 by mounting the removable medium 311 on the drive 310. Also, the program may be received at the communication unit 309 via a cable or wireless transmission medium, and installed in the storage unit 308. Additionally, the program may be installed in the ROM 302 or storage unit 308 beforehand.

Note that the program that the computer executes may be a program wherein the processing is performed in the time sequence along the sequence described in the present Specification, or may be a program wherein the processing is performed in parallel or at necessary timing such as when call-up is performed.

The embodiments of the present invention are not restricted to the above-mentioned embodiment, and various modifications may be made without departing from the essence of the present invention.

For example, the above-mentioned image encoding device 51 and image decoding device 101 may be applied to an optional electronic device. Hereafter, an example thereof will be described.

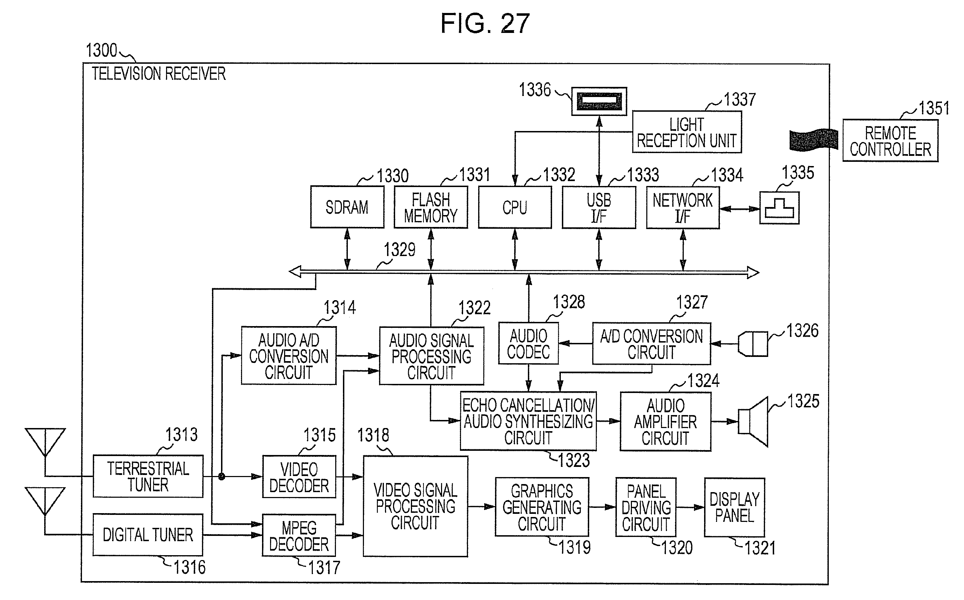

Fig. 27 is a block diagram illustrating a principal configuration example of a television receiver using the image decoding device to which the present invention has been applied.

A television receiver 1300 shown in Fig. 27 includes a terrestrial tuner 1313, a video decoder 1315, a video signal processing circuit 1318, a graphics generating circuit 1319, a panel driving circuit 1320, and a display panel 1321.

The terrestrial tuner 1313 receives the broadcast wave signals of a terrestrial analog broadcast via an antenna, demodulates, obtains video signals, and supplies these to the video decoder 1315. The video decoder 1315 subjects the video signals supplied from the terrestrial tuner 1313 to decoding processing, and supplies the obtained digital component signals to the video signal processing circuit 1318.

The video signal processing circuit 1318 subjects the video data supplied from the video decoder 1315 to predetermined processing such as noise removal or the like, and supplies the obtained video data to the graphics generating circuit 1319.

The graphics generating circuit 1319 generates the video data of a program to be displayed on a display panel 1321, or image data due to processing based on an application to be supplied via a network, or the like, and supplies the generated video data or image data to the panel driving circuit 1320. Also, the graphics generating circuit 1319 also performs processing such as supplying video data obtained by generating video data (graphics) for the user displaying a screen used for selection of an item or the like, and superimposing this on the video data of a program, to the panel driving circuit 1320 as appropriate.

The panel driving circuit 1320 drives the display panel 1321 based on the data supplied from the graphics generating circuit 1319 to display the video of a program, or the above-mentioned various screens on the display panel 1321.

The display panel 1321 is made up of an LCD (Liquid Crystal Display) and so forth, and displays the video of a program or the like in accordance with the control by the panel driving circuit 1320.

Also, the television receiver 1300 also includes an audio A/D (Analog/Digital) conversion circuit 1314, an audio signal processing circuit 1322, an echo cancellation/audio synthesizing circuit 1323, an audio amplifier circuit 1324, and a speaker 1325.

The terrestrial tuner 1313 demodulates the received broadcast wave signal, thereby obtaining not only a video signal but also an audio signal. The terrestrial tuner 1313 supplies the obtained audio signal to the audio A/D conversion circuit 1314.

The audio A/D conversion circuit 1314 subjects the audio signal supplied from the terrestrial tuner 1313 to A/D conversion processing, and supplies the obtained digital audio signal to the audio signal processing circuit 1322.

The audio signal processing circuit 1322 subjects the audio data supplied from the audio A/D conversion circuit 1314 to predetermined processing such as noise removal or the like, and supplies the obtained audio data to the echo cancellation/audio synthesizing circuit 1323.

The echo cancellation/audio synthesizing circuit 1323 supplies the audio data supplied from the audio signal processing circuit 1322 to the audio amplifier circuit 1324.

The audio amplifier circuit 1324 subjects the audio data supplied from the echo cancellation/audio synthesizing circuit 1323 to D/A conversion processing, subjects to amplifier processing to adjust to predetermined volume, and then outputs the audio from the speaker 1325.

Further, the television receiver 1300 also includes a digital tuner 1316, and an MPEG decoder 1317.

The digital tuner 1316 receives the broadcast wave signals of a digital broadcast (terrestrial digital broadcast, BS (Broadcasting Satellite)/CS (Communications Satellite) digital broadcast) via the antenna, demodulates to obtain MPEG-TS (Moving Picture Experts Group-Transport Stream), and supplies this to the MPEG decoder 1317.

The MPEG decoder 1317 descrambles the scrambling given to the MPEG-TS supplied from the digital tuner 1316, and extracts a stream including the data of a program serving as a playback object (viewing object). The MPEG decoder 1317 decodes an audio packet making up the extracted stream, supplies the obtained audio data to the audio signal processing circuit 1322, and also decodes a video packet making up the stream, and supplies the obtained video data to the video signal processing circuit 1318. Also, the MPEG decoder 1317 supplies EPG (Electronic Program Guide) data extracted from the MPEG-TS to a CPU 1332 via an unshown path.

The television receiver 1300 uses the above-mentioned image decoding device 101 as the MPEG decoder 1317 for decoding video packets in this way. Accordingly, the MPEG decoder 1317 can reduce the mode bit relating to Vertical prediction and Horizontal prediction in the same way as with the case of the image decoding device 101. Thus, encoding efficiency can be improved.

The video data supplied from the MPEG decoder 1317 is, in the same way as with the case of the video data supplied from the video decoder 1315, subjected to predetermined processing at the video signal processing circuit 1318. The video data subjected to predetermined processing is then superimposed on the generated video data and so forth at the graphics generating circuit 1319 as appropriate, supplied to the display panel 1321 via the panel driving circuit 1320, and the image thereof is displayed thereon.

The audio data supplied from the MPEG decoder 1317 is, in the same way as with the case of the audio data supplied from the audio A/D conversion circuit 1314, subjected to predetermined processing at the audio signal processing circuit 1322. The audio data subjected to predetermined processing is then supplied to the audio amplifier circuit 1324 via the echo cancellation/audio synthesizing circuit 1323, and subjected to D/A conversion processing and amplifier processing. As a result thereof, the audio adjusted in predetermined volume is output from the speaker 1325.

Also, the television receiver 1300 also includes a microphone 1326, and an A/D conversion circuit 1327.

The A/D conversion circuit 1327 receives the user's audio signal collected by the microphone 1326 provided to the television receiver 1300 serving as for audio conversation. The A/D conversion circuit 1327 subjects the received audio signal to A/D conversion processing, and supplies the obtained digital audio data to the echo cancellation/audio synthesizing circuit 1323.

In the event that the user (user A)'s audio data of the television receiver 1300 has been supplied from the A/D conversion circuit 1327, the echo cancellation/audio synthesizing circuit 1323 perform echo cancellation with the user A's audio data taken as a object. After echo cancellation, the echo cancellation/audio synthesizing circuit 1323 outputs audio data obtained by synthesizing the user A's audio data and other audio data, or the like from the speaker 1325 via the audio amplifier circuit 1324.

Further, the television receiver 1300 also includes an audio codec 1328, an internal bus 1329, SDRAM (Synchronous Dynamic Random Access Memory) 1330, flash memory 1331, a CPU 1332, a USB (Universal Serial Bus) I/F 1333, and a network I/F 1334.

The A/D conversion circuit 1327 receives the user's audio signal collected by the microphone 1326 provided to the television receiver 1300 serving as for audio conversation. The A/D conversion circuit 1327 subjects the received audio signal to A/D conversion processing, and supplies the obtained digital audio data to the audio codec 1328.

The audio codec 1328 converts the audio data supplied from the A/D conversion circuit 1327 into the data of a predetermined format for transmission via a network, and supplies to the network I/F 1334 via the internal bus 1329.

The network I/F 1334 is connected to the network via a cable mounted on a network terminal 1335. The network I/F 1334 transmits the audio data supplied from the audio codec 1328 to another device connected to the network thereof, for example. Also, the network I/F 1334 receives, via the network terminal 1335, the audio data transmitted from another device connected thereto via the network, and supplies this to the audio codec 1328 via the internal bus 1329, for example.

The audio codec 1328 converts the audio data supplied from the network I/F 1334 into the data of a predetermined format, and supplies this to the echo cancellation/audio synthesizing circuit 1323.

The echo cancellation/audio synthesizing circuit 1323 performs echo cancellation with the audio data supplied from the audio codec 1328 taken as a object, and outputs the data of audio obtained by synthesizing the audio data and other audio data, or the like, from the speaker 1325 via the audio amplifier circuit 1324.

The SDRAM 1330 stores various types of data necessary for the CPU 1332 performing processing.

The flash memory 1331 stores a program to be executed by the CPU 1332. The program stored in the flash memory 1331 is read out by the CPU 1332 at predetermined timing such as when activating the television receiver 1300, or the like. EPG data obtained via a digital broadcast, data obtained from a predetermined server via the network, and so forth are also stored in the flash memory 1331.

For example, MPEG-TS including the content data obtained from a predetermined server via the network by the control of the CPU 1332 is stored in the flash memory 1331. The flash memory 1331 supplies the MPEG-TS thereof to the MPEG decoder 1317 via the internal bus 1329 by the control of the CPU 1332, for example.

The MPEG decoder 1317 processes the MPEG-TS thereof in the same way as with the case of the MPEG-TS supplied from the digital tuner 1316. In this way, the television receiver 1300 receives the content data made up of video, audio, and so forth via the network, decodes using the MPEG decoder 1317, whereby video thereof can be displayed, and audio thereof can be output.

Also, the television receiver 1300 also includes a light reception unit 1337 for receiving the infrared signal transmitted from a remote controller 1351.

The light reception unit 1337 receives infrared rays from the remote controller 1351, and outputs a control code representing the content of the user's operation obtained by demodulation, to the CPU 1332.

The CPU 1332 executes the program stored in the flash memory 1331 to control the entire operation of the television receiver 1300 according to the control code supplied from the light reception unit 1337, and so forth. The CPU 1332, and the units of the television receiver 1300 are connected via an unshown path.

The USB I/F 1333 performs transmission/reception of data as to an external device of the television receiver 1300 which is connected via a USB cable mounted on a USB terminal 1336. The network I/F 1334 connects to the network via a cable mounted on the network terminal 1335, also performs transmission/reception of data other than audio data as to various devices connected to the network.

The television receiver 1300 uses the image decoding device 101 as the MPEG decoder 1317, whereby encoding efficiency can be improved. As a result thereof, the television receiver 1300 can obtain a decoded image with higher precision from broadcast wave signals received via the antenna, or the content data obtained via the network, and display this.

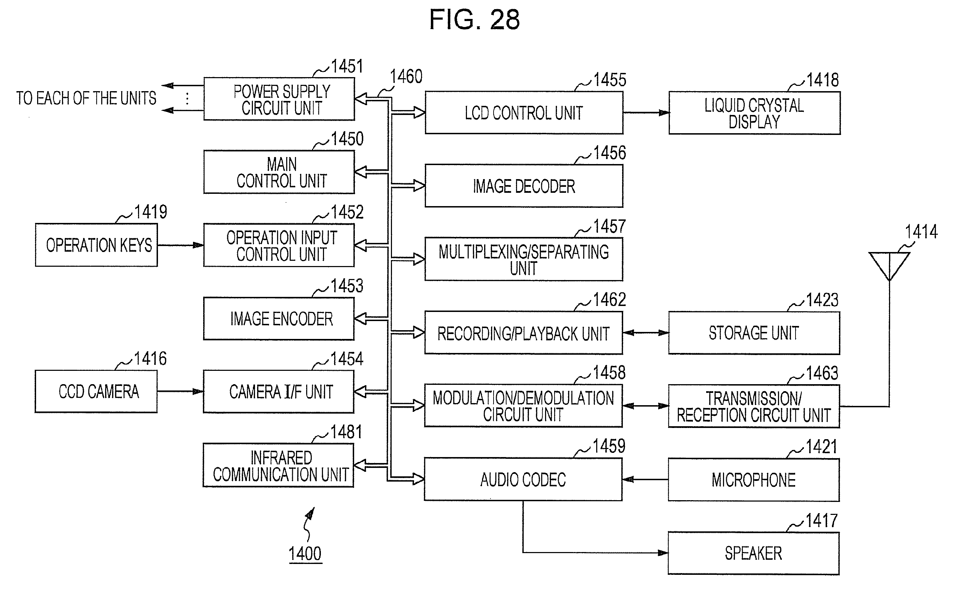

Fig. 28 is a block diagram illustrating a principal configuration example of a cellular phone using the image encoding device and image decoding device to which the present invention has been applied.

A cellular phone 1400 shown in Fig. 8 includes a main control unit 1450 configured so as to integrally control the units, a power supply circuit unit 1451, an operation input control unit 1452, an image encoder 1453, a camera I/F unit 1454, an LCD control unit 1455, an image decoder 1456, a multiplexing/separating unit 1457, a recording/playback unit 1462, a modulation/demodulation circuit unit 1458, and an audio codec 1459. These are mutually connected via a bus 1460.

Also, the cellular phone 1400 includes operation keys 1419, a CCD (Charge Coupled Devices) camera 1416, a liquid crystal display 1418, a storage unit 1423, a transmission/reception circuit unit 1463, an antenna 1414, a microphone (MIC) 1421, and a speaker 1417.

Upon a call being ended and a power key being turned on by the user's operation, the power supply circuit unit 1451 activates the cellular phone 1400 in an operational state by supplying power to the units from a battery pack.

The cellular phone 1400 performs various operations, such as transmission/reception of an audio signal, transmission/reception of an e-mail and image data, image shooting, data recoding, and so forth, in various modes such as a voice call mode, a data communication mode, and so forth, based on the control of the main control unit 1450 made up of a CPU, ROM, RAM, and so forth.

For example, in the voice call mode, the cellular phone 1400 converts the audio signal collected by the microphone (MIC) 1421 into digital audio data by the audio codec 1459, subjects this to spectrum spread processing at the modulation/demodulation circuit unit 1458, and subjects this to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (audio signal) transmitted to the base station is supplied to the communication partner's cellular phone via the public telephone network.

Also, for example, in the voice call mode, the cellular phone 1400 amplifies the reception signal received at the antenna 1414, at the transmission/reception circuit unit 1463, further subjects to frequency conversion processing and analog/digital conversion processing, subjects to spectrum inverse spread processing at the modulation/demodulation circuit unit 1458, and converts into an analog audio signal by the audio codec 1459. The cellular phone 1400 outputs the converted and obtained analog audio signal thereof from the speaker 1417.

Further, for example, in the event of transmitting an e-mail in the data communication mode, the cellular phone 1400 accepts the text data of the e-mail input by the operation of the operation keys 1419 at the operation input control unit 1452. The cellular phone 1400 processes the text data thereof at the main control unit 1450, and displays on the liquid crystal display 1418 via the LCD control unit 1455 as an image.

Also, the cellular phone 1400 generates e-mail data at the main control unit 1450 based on the text data accepted by the operation input control unit 1452, the user's instructions, and so forth. The cellular phone 1400 subjects the e-mail data thereof to spectrum spread processing at the modulation/demodulation circuit unit 1458, and subjects to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (e-mail) transmitted to the base station is supplied to a predetermined destination via the network, mail server, and so forth.

Also, for example, in the event of receiving an e-mail in the data communication mode, the cellular phone 1400 receives the signal transmitted from the base station via the antenna 1414 with the transmission/reception circuit unit 1463, amplifies, and further subjects to frequency conversion processing and analog/digital conversion processing. The cellular phone 1400 subjects the reception signal thereof to spectrum inverse spread processing at the modulation/demodulation circuit unit 1458 to restore the original e-mail data. The cellular phone 1400 displays the restored e-mail data on the liquid crystal display 1418 via the LCD control unit 1455.

Note that the cellular phone 1400 may record the received e-mail data in the storage unit 1423 via the recording/playback unit 1462.

This storage unit 1423 is an optional rewritable recording medium. The storage unit 1423 may be semiconductor memory such as RAM, built-in flash memory, or the like, may be a hard disk, or may be a removable medium such as a magnetic disk, a magneto-optical disk, an optical disc, USB memory, a memory card, or the like. It goes without saying that the storage unit 1423 may be other than these.

Further, for example, in the event of transmitting image data in the data communication mode, the cellular phone 1400 generates image data by imaging at the CCD camera 1416. The CCD camera 1416 includes a CCD serving as an optical device such as a lens, diaphragm, and so forth, and serving as a photoelectric conversion device, which images a subject, converts the intensity of received light into an electrical signal, and generates the image data of an image of the subject. The image data thereof is subjected to compression encoding at the image encoder 1453 using a predetermined encoding system, for example, such as MPEG2, MPEG4, or the like, via the camera I/F unit 1454, and accordingly, the image data thereof is converted into encoded image data.

The cellular phone 1400 employs the above-mentioned image encoding device 51 as the image encoder 1453 for performing such processing. Accordingly, the image encoder 1453 can reduce the mode bit relating to Vertical prediction and Horizontal prediction in the same way as with the case of the image encoding device 51. Thus, encoding efficiency can be improved.

Note that, at this time simultaneously, the cellular phone 1400 converts the audio collected at the microphone (MIC) 1421, while shooting with the CCD camera 1416, from analog to digital at the audio codec 1459, and further encodes this.

The cellular phone 1400 multiplexes the encoded image data supplied from the image encoder 1453, and the digital audio data supplied from the audio codec 1459 at the multiplexing/separating unit 1457 using a predetermined method. The cellular phone 1400 subjects the multiplexed data obtained as a result thereof to spectrum spread processing at the modulation/demodulation circuit unit 1458, and subjects to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (image data) transmitted to the base station is supplied to the communication partner via the network or the like.

Note that in the event that image data is not transmitted, the cellular phone 1400 may also display the image data generated at the CCD camera 1416 on the liquid crystal display 1418 via the LCD control unit 1455 instead of the image encoder 1453.

Also, for example, in the event of receiving the data of a moving image file linked to a simple website or the like in the data communication mode, the cellular phone 1400 receives the signal transmitted from the base station at the transmission/reception circuit unit 1463 via the antenna 1414, amplifies, and further subjects to frequency conversion processing and analog/digital conversion processing. The cellular phone 1400 subjects the received signal to spectrum inverse spread processing at the modulation/demodulation circuit unit 1458 to restore the original multiplexed data. The cellular phone 1400 separates the multiplexed data thereof at the multiplexing/separating unit 1457 into encoded image data and audio data.

The cellular phone 1400 decodes the encoded image data at the image decoder 1456 using the decoding system corresponding to a predetermined coding system such as MPEG2, MPEG4, or the like, thereby generating playback moving image data, and displays this on the liquid crystal display 1418 via the LCD control unit 1455. Thus, moving image data included in a moving image file linked to a simple website is displayed on the liquid crystal display 1418, for example.

The cellular phone 1400 employs the above-mentioned image decoding device 101 as the image decoder 1456 for performing such processing. Accordingly, the image decoder 1456 can reduce the mode bit relating to Vertical prediction and Horizontal prediction in the same way as with the case of the image decoding device 101. Thus, encoding efficiency can be improved.

At this time, simultaneously, the cellular phone 1400 converts the digital audio data into an analog audio signal at the audio codec 1459, and outputs this from the speaker 1417. Thus, audio data included in a moving image file linked to a simple website is played, for example.

Note that, in the same way as with the case of e-mail, the cellular phone 1400 may record (store) the received data liked to a simple website or the like in the storage unit 1423 via the recording/playback unit 1462.

Also, the cellular phone 1400 analyzes the imaged two-dimensional code obtained by the CCD camera 1416 at the main control unit 1450, whereby information recorded in the two-dimensional code can be obtained.

Further, the cellular phone 1400 can communicate with an external device at the infrared communication unit 1481 using infrared rays.

The cellular phone 1400 employs the image encoding device 51 as the image encoder 1453, whereby the encoding efficiency of encoded data to be generated by encoding the image data generated at the CCD camera 1416 can be improved, for example. As a result, the cellular phone 1400 can provide encoded data (image data) with excellent encoding efficiency to another device.

Also, the cellular phone 1400 employs the image decoding device 101 as the image decoder 1456, whereby a prediction image with high precision can be generated. As a result thereof, the cellular phone 1400 can obtain a decoded image with higher precision from a moving image file liked to a simple website, and display this, for example.

Note that description has been made so far wherein the cellular phone 1400 employs the CCD camera 1416, but the cellular phone 1400 may employ an image sensor (CMOS image sensor) using CMOS (Complementary Metal Oxide Semiconductor) instead of this CCD camera 1416. In this case as well, the cellular phone 1400 can image a subject and generate the image data of an image of the subject in the same way as with the case of employing the CCD camera 1416.

Also, description has been made so far regarding the cellular phone 1400, but the image encoding device 51 and image decoding device 101 may be applied to any kind of device in the same way as with the case of the cellular phone 1400 as long as it is a device having the same imaging function and communication function as those of the cellular phone 1400, for example, such as a PDA (Personal Digital Assistants), smart phone, UMPC (Ultra Mobile Personal Computers), net book, notebook-sized personal computer, or the like.

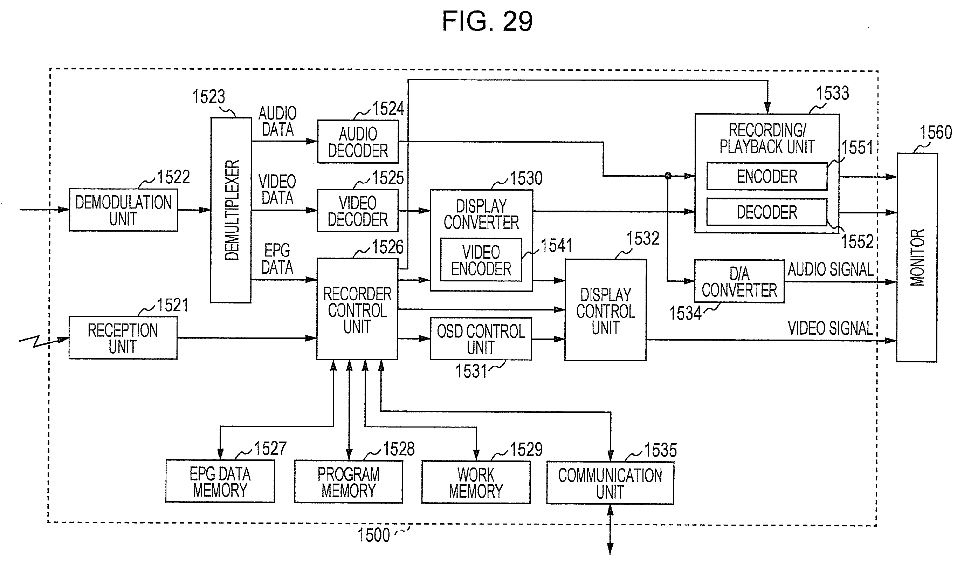

Fig. 29 is a block diagram illustrating a principal configuration example of a hard disk recorder which employs the image encoding device and image decoding device to which the present invention has been applied.

A hard disk recorder (HDD recorder) 1500 shown in Fig. 29 is a device which stores, in a built-in hard disk, audio data and video data of a broadcast program included in broadcast wave signals (television signals) received by a tuner and transmitted from a satellite or a terrestrial antenna or the like, and provides the stored data to the user at timing according to the user's instructions.

The hard disk recorder 1500 can extract audio data and video data from broadcast wave signals, decode these as appropriate, and store in the built-in hard disk, for example. Also, the hard disk recorder 1500 can also obtain audio data and video data from another device via the network, decode these as appropriate, and store in the built-in hard disk, for example.

Further, the hard disk recorder 1500 decodes audio data and video data recorded in the built-in hard disk, supplies to a monitor 1560, and displays an image thereof on the screen of the monitor 1560, for example. Also, the hard disk recorder 1500 can output sound thereof from the speaker of the monitor 1560.

The hard disk recorder 1500 decodes audio data and video data extracted from the broadcast wave signals obtained via the tuner, or the audio data and video data obtained from another device via the network, supplies to the monitor 1560, and displays an image thereof on the screen of the monitor 1560, for example. Also, the hard disk recorder 1500 can output sound thereof from the speaker of the monitor 1560.

It goes without saying that operations other than these may be performed.

As shown in Fig. 29, the hard disk recorder 1500 includes a reception unit 1521, a demodulation unit 1522, a demultiplexer 1523, an audio decoder 1524, a video decoder 1525, and a recorder control unit 1526. The hard disk recorder 1500 further includes EPG data memory 1527, program memory 1528, work memory 1529, a display converter 1530, an OSD (On Screen Display) control unit 1531, a display control unit 1532, a recording/playback unit 1533, a D/A converter 1534, and a communication unit 1535.

Also, the display converter 1530 includes a video encoder 1541. The recording/playback unit 1533 includes an encoder 1551 and a decoder 1552.

The reception unit 1521 receives the infrared signal from the remote controller (not shown), converts into an electrical signal, and outputs to the recorder control unit 1526. The recorder control unit 1526 is configured of, for example, a microprocessor and so forth, and executes various types of processing in accordance with the program stored in the program memory 1528. At this time, the recorder control unit 1526 uses the work memory 1529 according to need.

The communication unit 1535, which is connected to the network, performs communication processing with another device via the network. For example, the communication unit 1535 is controlled by the recorder control unit 1526 to communicate with a tuner (not shown), and to principally output a channel selection control signal to the tuner.

The demodulation unit 1522 demodulates the signal supplied from the tuner, and outputs to the demultiplexer 1523. The demultiplexer 1523 separates the data supplied from the demodulation unit 1522 into audio data, video data, and EPG data, and outputs to the audio decoder 1524, video decoder 1525, and recorder control unit 1526, respectively.

The audio decoder 1524 decodes the input audio data, for example, using the MPEG system, and outputs to the recording/playback unit 1533. The video decoder 1525 decodes the input video data, for example, using the MPEG system, and outputs to the display converter 1530. The recorder control unit 1526 supplies the input EPG data to the EPG data memory 1527 for storing.

The display converter 1530 encodes the video data supplied from the video decoder 1525 or recorder control unit 1526 into, for example, the video data conforming to the NTSC (National Television Standards Committee) system using the video encoder 1541, and outputs to the recording/playback unit 1533. Also, the display converter 1530 converts the size of the screen of the video data supplied from the video decoder 1525 or recorder control unit 1526 into the size corresponding to the size of the monitor 1560. The display converter 1530 further converts the video data of which the screen size has been converted into the video data conforming to the NTSC system using the video encoder 1541, converts into an analog signal, and outputs to the display control unit 1532.

The display control unit 1532 superimposes, under the control of the recorder control unit 1526, the OSD signal output from the OSD (On Screen Display) control unit 1531 on the video signal input from the display converter 1530, and outputs to the display of the monitor 1560 for display.

Also, the audio data output from the audio decoder 1524 has been converted into an analog signal using the D/A converter 1534, and supplied to the monitor 1560. The monitor 1560 outputs this audio signal from a built-in speaker.

The recording/playback unit 1533 includes a hard disk as a recording medium in which video data, audio data, and so forth are recorded.

The recording/playback unit 1533 encodes the audio data supplied from the audio decoder 1524 by the encoder 1551 using the MPEG system, for example. Also, the recording/playback unit 1533 encodes the video data supplied from the video encoder 1541 of the display converter 1530 by the encoder 1551 using the MPEG system. The recording/playback unit 1533 synthesizes the encoded data of the audio data thereof, and the encoded data of the video data thereof using the multiplexer. The recording/playback unit 1533 amplifies the synthesized data by channel coding, and writes the data thereof in the hard disk via a recording head.

The recording/playback unit 1533 plays the data recorded in the hard disk via a playback head, amplifies, and separates into audio data and video data using the demultiplexer. The recording/playback unit 1533 decodes the audio data and video data by the decoder 1552 using the MPEG system. The recording/playback unit 1533 converts the decoded audio data from digital to analog, and outputs to the speaker of the monitor 1560. Also, the recording/playback unit 1533 converts the decoded video data from digital to analog, and outputs to the display of the monitor 1560.

The recorder control unit 1526 reads out the latest EPG data from the EPG data memory 1527 based on the user's instructions indicated by the infrared signal from the remote controller which is received via the reception unit 1521, and supplies to the OSD control unit 1531. The OSD control unit 1531 generates image data corresponding to the input EPG data, and outputs to the display control unit 1532. The display control unit 1532 outputs the video data input from the OSD control unit 1531 to the display of the monitor 1560 for display. Thus, EPG (Electronic Program Guide) is displayed on the display of the monitor 1560.

Also, the hard disk recorder 1500 can obtain various types of data such as video data, audio data, EPG data, and so forth supplied from another device via the network such as the Internet or the like.

The communication unit 1535 is controlled by the recorder control unit 1526 to obtain encoded data such as video data, audio data, EPG data, and so forth transmitted from another device via the network, and to supply this to the recorder control unit 1526. The recorder control unit 1526 supplies the encoded data of the obtained video data and audio data to the recording/playback unit 1533, and stores in the hard disk, for example. At this time, the recorder control unit 1526 and recording/playback unit 1533 may perform processing such as re-encoding or the like according to need.

Also, the recorder control unit 1526 decodes the encoded data of the obtained video data and audio data, and supplies the obtained video data to the display converter 1530. The display converter 1530 processes, in the same way as the video data supplied from the video decoder 1525, the video data supplied from the recorder control unit 1526, supplies to the monitor 1560 via the display control unit 1532 for displaying an image thereof.

Alternatively, an arrangement may be made wherein in accordance with this image display, the recorder control unit 1526 supplies the decoded audio data to the monitor 1560 via the D/A converter 1534, and outputs audio thereof from the speaker.

Further, the recorder control unit 1526 decodes the encoded data of the obtained EPG data, and supplies the decoded EPG data to the EPG data memory 1527.

The hard disk recorder 1500 thus configured employs the image decoding device 101 as the video decoder 1525, decoder 1552, and a decoder housed in the recorder control unit 1526. Accordingly, the video decoder 1525, decoder 1552, and decoder housed in the recorder control unit 1526 can reduce the mode bit relating to Vertical prediction and Horizontal prediction in the same way as with the case of the image decoding device 101. Thus, encoding efficiency can be improved.

Accordingly, the hard disk recorder 1500 can generate a prediction image with high precision. As a result thereof, the hard disk recorder 1500 can obtain a decoded image with higher precision, for example, from the encoded data of video data received via the tuner, the encoded data of video data read out from the hard disk of the recording/playback unit 1533, or the encoded data of video data obtained via the network, and display on the monitor 1560.

Also, the hard disk recorder 1500 employs the image encoding device 51 as the encoder 1551. Accordingly, the encoder 1551 can reduce the mode bit relating to Vertical prediction and Horizontal prediction in the same way as with the case of the image decoding device 51. Thus, encoding efficiency can be improved.

Accordingly, the hard disk recorder 1500 can improve the encoding efficiency of encoded data to be recorded in the hard disk, for example. As a result thereof, the hard disk recorder 1500 can use the storage region of the hard disk in a more effective manner.

Note that description has been made so far regarding the hard disk recorder 1500 for recording video data and audio data in the hard disk, but it goes without saying that any kind of recording medium may be employed. For example, even with a recorder to which a recording medium other than a hard disk, such as flash memory, optical disc, a video tape, or the like, is applied, in the same way as with the case of the above-mentioned hard disk recorder 1500, the image encoding device 51 and image decoding device 101 can be applied thereto.

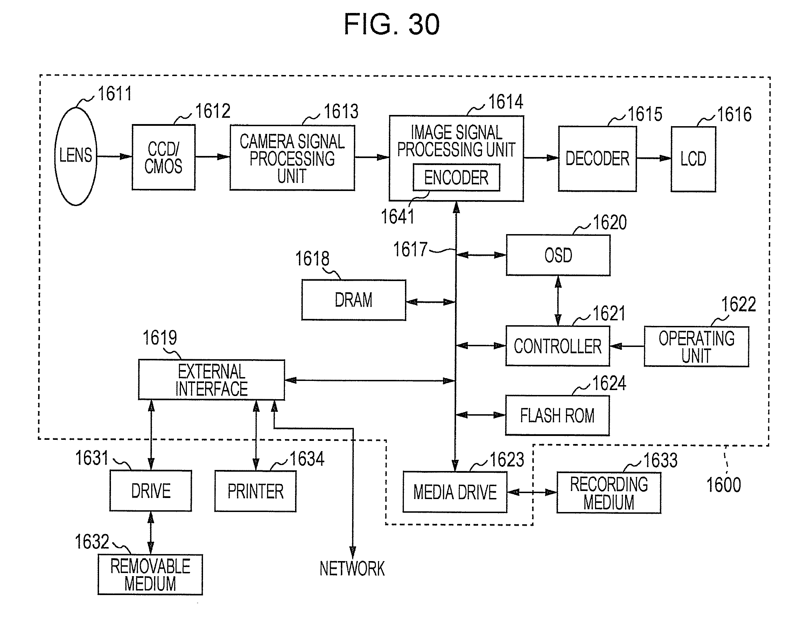

Fig. 30 is a block diagram illustrating a principal configuration example of a camera employing the image decoding device and image encoding device to which the present invention has been applied.

A camera 1600 shown in Fig. 30 images a subject, displays an image of the subject on an LCD 1616, and records this in a recording medium 1633 as image data.

A lens block 1611 inputs light (i.e., video of a subject) to a CCD/CMOS 1612. The CCD/CMOS 1612 is an image sensor employing a CCD or CMOS, converts the intensity of received light into an electrical signal, and supplies to a camera signal processing unit 1613.

The camera signal processing unit 1613 converts the electrical signal supplied from the CCD/CMOS 1612 into color difference signals of Y, Cr, and Cb, and supplies to an image signal processing unit 1614. The image signal processing unit 1614 subjects, under the control of a controller 1621, the image signal supplied from the camera signal processing unit 1613 to predetermined image processing, or encodes the image signal thereof by an encoder 1641 using the MPEG system for example. The image signal processing unit 1614 supplies encoded data generated by encoding an image signal, to a decoder 1615. Further, the image signal processing unit 1614 obtains data for display generated at an on-screen display (OSD) 1620, and supplies this to the decoder 1615.

With the above-mentioned processing, the camera signal processing unit 1613 appropriately takes advantage of DRAM (Dynamic Random Access Memory) 1618 connected via a bus 1617 to hold image data, encoded data encoded from the image data thereof, and so forth in the DRAM 1618 thereof according to need.

The decoder 1615 decodes the encoded data supplied from the image signal processing unit 1614, and supplies obtained image data (decoded image data) to the LCD 1616. Also, the decoder 1615 supplies the data for display supplied from the image signal processing unit 1614 to the LCD 1616. The LCD 1616 synthesizes the image of the decoded image data, and the image of the data for display, supplied from the decoder 1615 as appropriate, and displays a synthesizing image thereof.

The on-screen display 1620 outputs, under the control of the controller 1621, data for display such as a menu screen or icon or the like made up of a symbol, characters, or a figure to the image signal processing unit 1614 via the bus 1617.

Based on a signal indicating the content commanded by the user using an operating unit 1622, the controller 1621 executes various types of processing, and also controls the image signal processing unit 1614, DRAM 1618, external interface 1619, on-screen display 1620, media drive 1623, and so forth via the bus 1617. A program, data, and so forth necessary for the controller 1621 executing various types of processing are stored in FLASH ROM 1624.

For example, the controller 1621 can encode image data stored in the DRAM 1618, or decode encoded data stored in the DRAM 1618 instead of the image signal processing unit 1614 and decoder 1615. At this time, the controller 1621 may perform encoding and decoding processing using the same system as the encoding and decoding system of the image signal processing unit 1614 and decoder 1615, or may perform encoding and decoding processing using a system that neither the image signal processing unit 1614 nor the decoder 1615 can handle.

Also, for example, in the event that start of image printing has been instructed from the operating unit 1622, the controller 1621 reads out image data from the DRAM 1618, and supplies this to a printer 1634 connected to the external interface 1619 via the bus 1617 for printing.

Further, for example, in the event that image recording has been instructed from the operating unit 1622, the controller 1621 reads out encoded data from the DRAM 1618, and supplies this to a recording medium 1633 mounted on the media drive 1623 via the bus 1617 for storing.

The recording medium 1633 is an optional readable/writable removable medium, for example, such as a magnetic disk, a magneto-optical disk, an optical disc, semiconductor memory, or the like. It goes without saying that the recording medium 1633 is also optional regarding the type of a removable medium, and accordingly may be a tape device, or may be a disc, or may be a memory card. It goes without saying that the recoding medium 1633 may be a non-contact IC card or the like.

Alternatively, the media drive 1623 and the recording medium 1633 may be configured so as to be integrated into a non-transportability recording medium, for example, such as a built-in hard disk drive, SSD (Solid State Drive), or the like.

The external interface 1619 is configured of, for example, a USB input/output terminal and so forth, and is connected to the printer 1634 in the event of performing printing of an image. Also, a drive 1631 is connected to the external interface 1619 according to need, on which the removable medium 1632 such as a magnetic disk, optical disc, or magneto-optical disk is mounted as appropriate, and a computer program read out therefrom is installed in the FLASH ROM 1624 according to need.

Further, the external interface 1619 includes a network interface to be connected to a predetermined network such as a LAN, the Internet, or the like. For example, in accordance with the instructions from the operating unit 1622, the controller 1621 can read out encoded data from the DRAM 1618, and supply this from the external interface 1619 to another device connected via the network. Also, the controller 1621 can obtain, via the external interface 1619, encoded data or image data supplied from another device via the network, and hold this in the DRAM 1618, or supply this to the image signal processing unit 1614.

The camera 1600 thus configured employs the image decoding device 101 as the decoder 1615. Accordingly, the decoder 1615 can reduce the mode bit relating to Vertical prediction and Horizontal prediction in the same way as with the case of the image decoding device 101. Thus, encoding efficiency can be improved.

Accordingly, the camera 1600 can generate a prediction image with high precision. As a result thereof, the camera 1600 can obtain a decoded image with higher precision, for example, from the image data generated at the CCD/CMOS 1612, the encoded data of video data read out from the DRAM 1618 or recording medium 1633, or the encoded data of video data obtained via the network, and display on the LCD 1616.

Also, the camera 1600 employs the image encoding device 51 as the encoder 1641. Accordingly, the encoder 1641 can reduce the mode bit relating to Vertical prediction and Horizontal prediction in the same way as with the case of the image encoding device 51. Thus, encoding efficiency can be improved.

Accordingly, the camera 1600 can improve encoding efficiency of encoded data to be recorded in the hard disk, for example. As a result thereof, the camera 1600 can use the storage region of the DRAM 1618 or recording medium 1633 in a more effective manner.

Note that the decoding method of the image decoding device 101 may be applied to the decoding processing that the controller 1621 performs. Similarly, the encoding method of the image encoding device 51 may be applied to the encoding processing that the controller 1621 performs.

Also, the image data that the camera 1600 images may be a moving image, or may be a still image.

It goes without saying that the image encoding device 51 and image decoding device 101 may be applied to a device or system other than the above-mentioned devices.

Reference Signs List

| | |
|---|---|
| 51 | image encoding device |
| 66 | lossless encoding unit |
| 74 | intra prediction unit |
| 75 | horizontal vertical prediction determining unit |
| 76 | motion prediction/compensation unit |
| 77 | prediction image selecting unit |
| 81 | horizontally adjacent pixel averaging unit |
| 82 | vertically adjacent pixel averaging unit |
| 83 | horizontally adjacent pixel distribution calculating unit |
| 84 | vertically adjacent pixel distribution calculating unit |
| 85 | prediction mode application determining unit |
| 101 | image decoding device |
| 112 | lossless decoding unit |
| 121 | intra prediction unit |
| 122 | horizontal vertical prediction determining unit |
| 123 | motion prediction/compensation unit |
| 124 | switch |

**Claims**

**1.** An image processing device comprising:

horizontal pixel distribution value reception means configured to receive a horizontal pixel distribution value that is a distribution value of an adjacent pixel value positioned on the upper portion of a current block for intra prediction;
vertical pixel distribution value reception means configured to receive a vertical pixel distribution value that is a distribution value of an adjacent pixel value positioned on the left portion of said current block;

prediction mode application determining means configured to apply a vertical prediction mode to said current block in the event that said horizontal pixel distribution value received by said horizontal pixel distribution value reception means is greater than a predetermined threshold in the horizontal direction, and also said vertical pixel distribution value received by said vertical pixel distribution value reception mean is smaller than a predetermined threshold in the vertical direction;

intra prediction means configured to generate a prediction image of said current block in the prediction mode applied by said prediction mode application determining means; and

encoding means configured to encode difference between the image of said current block and said prediction image generated by said intra prediction means.

2. The image processing device according to Claim 1, wherein said prediction mode application determining means apply a horizontal prediction mode to said current block in the event that said horizontal pixel distribution value received by said horizontal pixel distribution value reception means is smaller than -said threshold in the horizontal direction, and also said vertical pixel distribution value received by said vertical pixel distribution value reception mean is greater than said threshold in the vertical direction.

3. The image processing device according to Claim 2, wherein said threshold in the vertical direction and said threshold in the horizontal direction are defined as a function for a quantization parameter as to said current block.

4. The image processing device according to Claim 3, wherein the greater said quantization parameter is, the greater a value is set to said threshold in the vertical direction and said threshold in the horizontal direction.

5. The image processing device according to Claim 1, further comprising:

horizontal pixel distribution value calculating means configured to calculate said horizontal pixel distribution value; and

vertical pixel distribution value calculating means configured to calculate said vertical pixel distribution value.

6. An image processing method comprising the step of:

causing an image processing device

to receive a horizontal pixel distribution value that is a distribution value of an adjacent pixel value positioned on the upper portion of a current block for intra prediction;

to receive a vertical pixel distribution value that is a distribution value of an adjacent pixel value positioned on the left portion of said current block;

to apply a vertical prediction mode to said current block in the event that said received horizontal pixel distribution value is greater than a predetermined threshold in the horizontal direction, and also said received vertical pixel distribution value is smaller than a predetermined threshold in the vertical direction;

to generate a prediction image of said current block in an applied prediction mode; and

to encode difference between an image of said current block and said generated prediction image.

7. An image processing device comprising:

decoding means configured to decode an encoded image of a current block for intra prediction;

horizontal pixel distribution value reception means configured to receive a horizontal pixel distribution value that is a distribution value of an adjacent pixel value positioned on the upper portion of said current block;

vertical pixel distribution value reception means configured to receive a vertical pixel distribution value that is a distribution value of an adjacent pixel value positioned on the left portion of said current block;

prediction mode application determining means configured to apply a vertical prediction mode to said current block in the event that said vertical pixel distribution value received by said vertical pixel distribution value reception means is smaller than a predetermined threshold in the vertical direction, and also said horizontal pixel distribution value received by said horizontal pixel distribution value reception mean is greater than a predetermined threshold in the horizontal direction;

intra prediction means configured to generate a prediction image of said current block in the prediction mode applied by said prediction mode application determining means; and

calculating means configured to add said image decoded by said decoding means, and said prediction image generated by said intra prediction means.

8. The image processing device According to Claim 7, wherein said prediction mode application determining means apply a horizontal prediction mode to said current block in the event that said horizontal pixel distribution value received by said horizontal pixel distribution value reception means is smaller than a threshold in the horizontal direction, and also said vertical pixel distribution value received by said vertical pixel distribution value reception mean is greater than a threshold in the vertical direction.

9. The image processing device according to Claim 8, wherein said threshold in the vertical direction and said threshold in the horizontal direction are defined as a function for a quantization parameter as to said current block.

10. The image processing device according to Claim 9, wherein the greater said quantization parameter is, the greater a value is set to said threshold in the vertical direction and said threshold in the horizontal direction.

11. The image processing device according to Claim 7, further comprising:

   horizontal pixel distribution value calculating means configured to calculate said horizontal pixel distribution value; and
   vertical pixel distribution value calculating means configured to calculate said vertical pixel distribution value.

12. An image processing method comprising the step of:

   causing an image processing device
   to decode an encoded image of a current block for intra prediction;
   to receive a horizontal pixel distribution value that is a distribution value of an adjacent pixel value positioned on the upper portion of said current block;
   to receive a vertical pixel distribution value that is a distribution value of an adjacent pixel value positioned on the left portion of said current block;
   to apply a vertical prediction mode to said current block in the event that said received horizontal pixel distribution value is greater than a predetermined threshold in the horizontal direction, and also said received vertical pixel distribution value is smaller than a predetermined threshold in the vertical direction;
   to generate a prediction image of said current block in an applied prediction mode; and
   to add said decoded image and said generated prediction image.

# FIG. 1

EP 2 405 658 A1

# FIG. 2

74

```
┌──────────────────────────────────────────────────────────────┐
│                     INTRA PREDICTION UNIT                       │
└──────────────────────────────────────────────────────────────┘
```

```
┌──────────────────────────────────────────────────────────────────────────┐
│        81                              83                                   │
│  ┌─────────────────┐        ┌──────────────────────┐                       │
│  │ HORIZONTALLY    │        │ HORIZONTALLY ADJACENT │                       │
│  │ ADJACENT PIXEL  │───────▶│ PIXEL DISTRIBUTION    │──┐     85             │
│  │ AVERAGING UNIT  │        │ CALCULATING UNIT      │  │   ┌──────────────┐ │
│  └─────────────────┘        └──────────────────────┘  └──▶│ PREDICTION MODE│ │
│                                                           │ APPLICATION   │ │
│        82                              84                 │ DETERMINING UNIT│ │
│  ┌─────────────────┐        ┌──────────────────────┐  ┌──▶└──────────────┘ │
│  │ VERTICALLY      │        │ VERTICALLY ADJACENT   │  │                    │
│  │ ADJACENT PIXEL  │───────▶│ PIXEL DISTRIBUTION    │──┘                    │
│  │ AVERAGING UNIT  │        │ CALCULATING UNIT      │                       │
│  └─────────────────┘        └──────────────────────┘                       │
│                                                                             │
│       HORIZONTAL VERTICAL PREDICTION DETERMINING UNIT                       │
└──────────────────────────────────────────────────────────────────────────┘
```

75

# FIG. 3

```
( START OF ENCODING PROCESSING )
              |
              v
   PERFORM A/D CONVERSION          S11
              |
              v
      PERFORM SORTING              S12
              |
              v
 CALCULATE DIFFERENCE BETWEEN      S13
  IMAGE AND PREDICTION IMAGE
              |
              v
 PERFORM ORTHOGONAL TRANSFORM      S14
              |
              v
    PERFORM QUANTIZATION           S15
              |
              v
 PERFORM INVERSE QUANTIZATION      S16
              |
              v
  PERFORM INVERSE ORTHOGONAL       S17
          TRANSFORM
              |
              v
     ADD PREDICTION IMAGE          S18
              |
              v
      PERFORM FILTERING            S19
              |
              v
            STORE                  S20
              |
              |
              v
    PREDICTION PROCESSING          S21
              |
              v
    SELECT PREDICTION IMAGE        S22
              |
              v
      PERFORM ENCODING             S23
              |
              v
         ACCUMULATE                S24
              |
              v
        CONTROL RATE               S25
              |
              v
          ( END )
```

# FIG. 4

START OF PREDICTION PROCESSING

INTRA HORIZONTAL VERTICAL PREDICTION
DETERMINATION PROCESSING — S31

INTRA PREDICTION PROCESSING — S32

INTER MOTION PREDICTION
PROCESSING — S33

DETERMINE OPTIMAL
INTER PREDICTION MODE — S34

RETURN

FIG. 5

## FIG. 6

| Intra4×4LumaPredMode[4×4LumaBlkIdx] | Name of Intra4×4LumaPredMode[4×4LumaBlkIdx] |
|---|---|
| 0 | Intra_4×4_Vertical(prediction mode) |
| 1 | Intra_4×4_Horizontal(prediction mode) |
| 2 | Intra_4×4_DC(prediction mode) |
| 3 | Intra_4×4_Diagonal_Down_Left(prediction mode) |
| 4 | Intra_4×4_Diagonal_Down_Right(prediction mode) |
| 5 | Intra_4×4_Vertical_Right(prediction mode) |
| 6 | Intra_4×4_Horizontal_Down(prediction mode) |
| 7 | Intra_4×4_Vertical_Left(prediction mode) |
| 8 | Intra_4×4_Horizontal_Up(prediction mode) |

# FIG. 7

Mode 0-Vertical

Mode 1-Horizontal

Mode 2-DC

Mode 3-Diag Down/Left

Mode 4-
Diag Down/Right

Mode 5-
Vertical-Right

Mode 6-
Horizontal-Down

Mode 7-
Vertical-Left

Mode 8-
Horizontal-Up

## FIG. 8

## FIG. 9

## FIG. 10

# FIG. 11

0: VERTICAL

1: HORIZONTAL

2: DC

AVERAGE VALUE

3: DIAGONALLY LOWER LEFT

4: DIAGONALLY LOWER RIGHT

5: VERTICALLY RIGHT

6: HORIZONTALLY DOWN

7: VERTICALLY LEFT

8: HORIZONTALLY UP

EP 2 405 658 A1

## FIG. 12

| Intra8×8LumaPredMode[8×8LumaBlkIdx] | Name of Intra8×8LumaPredMode[8×8LumaBlkIdx] |
|---|---|
| 0 | Intra_8×8_Vertical(prediction mode) |
| 1 | Intra_8×8_Horizontal(prediction mode) |
| 2 | Intra_8×8_DC(prediction mode) |
| 3 | Intra_8×8_Diagonal_Down_Left(prediction mode) |
| 4 | Intra_8×8_Diagonal_Down_Right(prediction mode) |
| 5 | Intra_8×8_Vertical_Right(prediction mode) |
| 6 | Intra_8×8_Horizontal_Down(prediction mode) |
| 7 | Intra_8×8_Vertical_Left(prediction mode) |
| 8 | Intra_8×8_Horizontal_Up(prediction mode) |

EP 2 405 658 A1

# FIG. 13

| Intra_16×16_pred_mode | Name of Intra_16×16_pred_mode |
|---|---|
| 0 | Intra_16×16_Vertical(prediction_mode) |
| 1 | Intra_16×16_Horizontal(prediction_mode) |
| 2 | Intra_16×16_DC(prediction_mode) |
| 3 | Intra_16×16_Plane(prediction_mode) |

FIG. 14

## FIG. 15

P(0, –1) . . . P(7, –1) . . . P(15, –1)

P(–1, 0)

P(–1, 7)

P(–1, 15)

## FIG. 16

| Intra_chroma_pred_mode | Name of Intra_chroma_pred_mode |
|---|---|
| 0 | Intra_chroma_DC(prediction mode) |
| 1 | Intra_chroma_Horizontal(prediction mode) |
| 2 | Intra_chroma_Vertical(prediction mode) |
| 3 | Intra_chroma_Plane(prediction mode) |

# FIG. 17

START OF INTRA HORIZONTAL VERTICAL
PREDICTION DETERMINATION PROCESSING

S41
CALCULATE HORIZONTAL PIXEL AVERAGE VALUE AveH
OF PIXEL VALUES A THROUGH D, AND CALCULATE
HORIZONTAL PIXEL DISTRIBUTION VALUE DistH

S42
CALCULATE VERTICAL PIXEL AVERAGE VALUE AveV
OF PIXEL VALUES I THROUGH J, AND CALCULATE
VERTICAL PIXEL DISTRIBUTION VALUE DistV

S43
DistH < ThH?
No → 

Yes

S44
DistV < ThV?
No

Yes

S47
DistV < ThV?
No

Yes

S45
APPLY MODE 1

S46
APPLY NORMAL
PREDICTION MODE

S48
APPLY MODE 0

RETURN

EP 2 405 658 A1

FIG. 18

# FIG. 19

( START OF INTRA PREDICTION PROCESSING )

| PERFORM INTRA PREDICTION AS TO THE INTRA PREDICTION MODES OF 4×4 PIXELS, 8×8 PIXELS, AND 16×16 PIXELS | S51 |

| CALCULATE COST FUNCTION VALUE AS TO THE INTRA PREDICTION MODES | S52 |

| DETERMINE OPTIMAL MODE AS TO THE INTRA PREDICTION MODES | S53 |

| SELECT OPTIMAL INTRA PREDICTION MODE OUT OF THE OPTIMAL MODES DETERMINED AS TO THE INTRA PREDICTION MODES | S54 |

( RETURN )

# FIG. 20

START OF INTER MOTION PREDICTION PROCESSING

DETERMINE MOTION VECTOR AND
REFERENCE IMAGE AS TO THE INTER PREDICTION
MODES OF 16×16 PIXELS THROUGH 4×4 PIXELS — S61

PERFORM MOTION PREDICTION/COMPENSATION
PROCESSING AS TO REFERENCE IMAGE
BASED ON MOTION VECTOR REGARDING
THE INTER PREDICTION MODES — S62

GENERATE MOTION VECTOR INFORMATION
REGARDING MOTION VECTOR DETERMINED
AS TO THE INTER PREDICTION MODES — S63

CALCULATE COST FUNCTION VALUE
AS TO THE INTER PREDICTION MODES — S64

RETURN

# FIG. 21

EP 2 405 658 A1

# FIG. 22

START OF DECODING PROCESSING

| ACCUMULATE IMAGE | S131 |

| PERFORM DECODING | S132 |

| PERFORM INVERSE QUANTIZATION | S133 |

| PERFORM INVERSE ORTHOGONAL TRANSFORM | S134 |

| ADD PREDICTION IMAGE | S135 |

| PERFORM FILTERING | S136 |

| STORE | S137 |

| PREDICTION PROCESSING | S138 |

| SELECT PREDICTION IMAGE | S139 |

| PERFORM SORTING | S140 |

| PERFORM D/A CONVERSION | S141 |

END

## FIG. 23

START OF PREDICTION PROCESSING

S171 — HAS INTRA ENCODING BEEN PERFORMED? — No

Yes

S172 — INTRA 4×4 PREDICTION MODE? — No

Yes

S173 — OBTAIN INTRA PREDICTION MODE INFORMATION

S174 — PERFORM INTRA PREDICTION

S175 — INTRA HORIZONTAL VERTICAL PREDICTION DETERMINATION PROCESSING

S176 — OBTAIN INTER PREDICTION MODE INFORMATION, REFERENCE FRAME INFORMATION, AND MOTION VECTOR INFORMATION

S177 — PERFORM INTER MOTION PREDICTION

RETURN

FIG. 24

START OF INTRA HORIZONTAL VERTICAL
PREDICTION DETERMINATION PROCESSING

CALCULATE HORIZONTAL PIXEL AVERAGE VALUE AveH
OF PIXEL VALUES A THROUGH D, AND CALCULATE
HORIZONTAL PIXEL DISTRIBUTION VALUE DistH — S191

CALCULATE VERTICAL PIXEL AVERAGE VALUE AveV
OF PIXEL VALUES I THROUGH J, AND CALCULATE
VERTICAL PIXEL DISTRIBUTION VALUE DistV — S192

DistH < ThH? — S193
No
Yes

DistV < ThV? — S194
No
Yes

DistV < ThV? — S198
No
Yes

PERFORM INTRA PREDICTION
IN MODE 1 — S195

OBTAIN INTRA PREDICTION
MODE INFORMATION — S196

PERFORM INTRA PREDICTION
IN MODE 0 — S199

PERFORM INTRA PREDICTION IN
ACCORDANCE WITH THE OBTAINED
INTRA PREDICTION MODE — S197

RETURN

EP 2 405 658 A1

FIG. 25

# FIG. 26

EP 2 405 658 A1

## FIG. 27

EP 2 405 658 A1

# FIG. 28

TO EACH OF THE UNITS

POWER SUPPLY CIRCUIT UNIT ~1451

1460

LCD CONTROL UNIT ~1455

LIQUID CRYSTAL DISPLAY ~1418

MAIN CONTROL UNIT ~1450

IMAGE DECODER ~1456

OPERATION KEYS ~1419

OPERATION INPUT CONTROL UNIT ~1452

MULTIPLEXING/SEPARATING UNIT ~1457

1414

IMAGE ENCODER ~1453

RECORDING/PLAYBACK UNIT ~1462

STORAGE UNIT ~1423

CCD CAMERA ~1416

CAMERA I/F UNIT ~1454

MODULATION/DEMODULATION CIRCUIT UNIT ~1458

TRANSMISSION/ RECEPTION CIRCUIT UNIT ~1463

INFRARED COMMUNICATION UNIT ~1481

AUDIO CODEC ~1459

MICROPHONE ~1421

1400

SPEAKER ~1417

EP 2 405 658 A1

# FIG. 29

EP 2 405 658 A1

# FIG. 30

EP 2 405 658 A1

<table>
<tr><td colspan="2">**INTERNATIONAL SEARCH REPORT**</td><td>International application No.<br>PCT/JP2010/052924</td></tr>
</table>

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-111520 A (Canon Inc.),<br>21 May 2009 (21.05.2009),<br>paragraphs [0024] to [0035], [0039]<br>(Family: none) | 1-12 |
| A | WO 2007/072895 A1 (Matsushita Electric<br>Industrial Co., Ltd.),<br>28 June 2007 (28.06.2007),<br>paragraphs [0069] to [0077], [0088]<br>& JP 2009-60153 A & US 2009/0268974 A1 | 1-12 |
| A | JP 2005-252679 A (Nippon Telegraph And<br>Telephone Corp.),<br>15 September 2005 (15.09.2005),<br>paragraphs [0050] to [0069]<br>(Family: none) | 1-12 |

☐ Further documents are listed in the continuation of Box C.  ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>15 March, 2010 (15.03.10) | Date of mailing of the international search report<br>23 March, 2010 (23.03.10) |
|---|---|
| Name and mailing address of the ISA/<br>Japanese Patent Office | Authorized officer |
| Facsimile No. | Telephone No. |

Form PCT/ISA/210 (second sheet) (July 2009)